# EUROPEAN PATENT SPECIFICATION

(11) **EP 1 801 393 B1**
(45) Date of publication and mention of the grant of the patent: **30.06.2010**
(21) Application number: 05781961.7
(22) Date of filing: 09.09.2005
(51) Int. Cl.: F02D 13/02, F02D 15/02, F02D 29/00, F02D 41/12, F02D 43/00

(54) **VEHICLE CONTROL SYSTEM**
FAHRZEUGSTEUERUNGSSYSTEM
SYSTEME DE COMMANDE DE VEHICULE

(30) Priority: 14.09.2004 JP 2004267507
(43) Date of publication of application: 27.06.2007
(73) Proprietor: Honda Motor Co., Ltd., Tokyo 107-8556 (JP)
(72) Inventor: YASUI, Yuji, Wako-shi, Saitama 3510193 (JP)
(74) Representative: Trossin, Hans-Jürgen
(86) International application number: PCT/JP2005/016604
(87) International publication number: WO 2006/030707

(56) References cited:
- JP-A- 5 118 238
- JP-A- 10 009 005
- JP-A- 10 009 005
- JP-A- 10 030 416
- JP-A- 10 030 416
- JP-A- 11 030 144
- JP-A- 2000 073 804
- JP-A- 2002 089 302
- JP-A- 2002 089 302
- JP-A- 2004 239 147
- US-A- 5 733 219
- US-A1- 2002 091 037

## Description

### [Field of the Invention]

The present invention relates to a control system for a vehicle, for controlling the valve lift of an intake/exhaust valve of an internal combustion engine, the cam phase of an intake/exhaust cam, and the compression ratio of the engine.

### [Background Art]

Conventionally, as a control system for controlling the valve lift of an intake valve and the cam phase of an intake cam, one disclosed in JP-A-2002 89 302 is known. In this control system, when the engine is in a predetermined decelerating state, the valve lift is controlled to be reduced, and the cam phase is controlled to be retarded. This makes it possible to increase the pumping loss to thereby obtain a sufficient engine braking force.

Many of engines of the above-mentioned kind which are equipped with a variable lift mechanism have no throttle valve in their intake pipe since they control the amount of intake air drawn therein by the valve lift. In this case, even when the engine is in the decelerating state, almost no negative pressure is generated within the intake pipe, and therefore the pumping loss is smaller compared with the case of the throttle valve being provided in the intake pipe. Therefore, the engine braking force is relatively small for any transmission ratio of a transmission, and the differences in this respect between transmission ratios are also small, which makes it difficult for a driver to be sure of a gear position currently set, by feeling obtained from engine braking. For this reason, for example, when a vehicle is traveling on a downhill slope, and deceleration is required, the driver is sometimes unaware of the vehicle being in a high-speed gear position, and fails to carry out a downshift operation. As described above, in addition to the fact that the engine braking force is inherently small, high-speed gear positions are often used without intention during deceleration, and hence, in such a case, the engine braking force is hardly obtained. As a consequence, the foot brake is frequently used to shorten the service life thereof.

Further, when the rotational speed of the engine (hereinafter referred to as "the engine speed") is relatively low, a change in the engine braking force with respect to a change in the engine speed is large. This tendency is particularly conspicuous in the engine equipped with the variable lift mechanism. Therefore, jerky feeling is liable to be caused by a sudden change in the engine braking force during low engine speed, which can degrade drivability.

The present invention has been made to provide a solution to the above-described problems, and a first object thereof is to provide a control system for a vehicle, which is capable of obtaining an appropriate engine braking force when a driver demands deceleration, thereby making it possible to prolong the service life of a foot brake. It is a second object of the present invention to provide a control system which is capable of making jerky feeling less liable to be caused by a sudden change in the engine braking force when the rotational speed of an internal combustion engine is relatively low upon occurrence of a driver's demand for deceleration, thereby making it possible to ensure excellent drivability.
US 2002/091037 A1 shows a control system for a truck-type vehicle that is provided with a transmission for changing speed of power from an internal combustion engine using one of a plurality of predetermined transmission ratios in accordance with an intention of a driver. The control system controls a compression ratio of the engine and the transmission ratio of the transmission, for controllably vary the compression braking torque to regulate the vehicle speed. The engine speed is not used to determine the compression ratio.

### [Disclosure of the Invention]

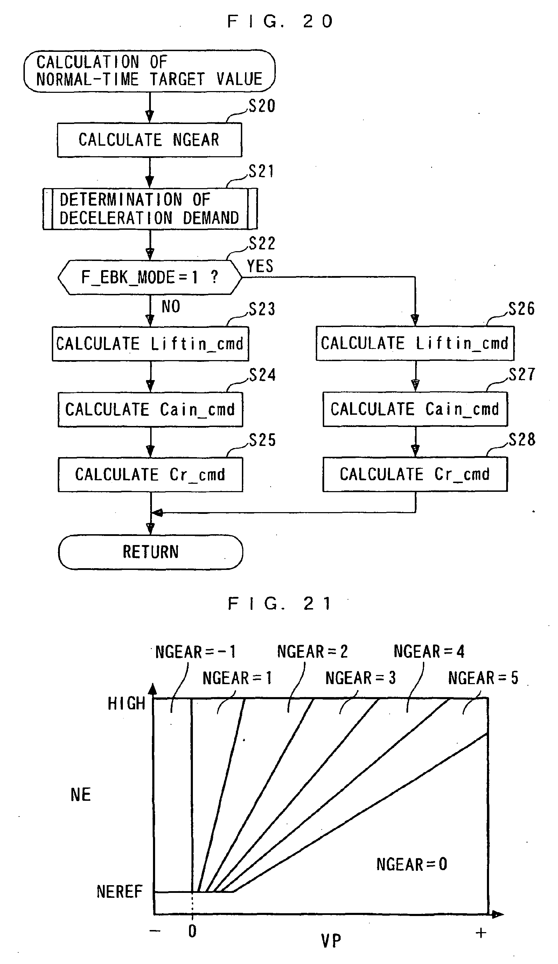

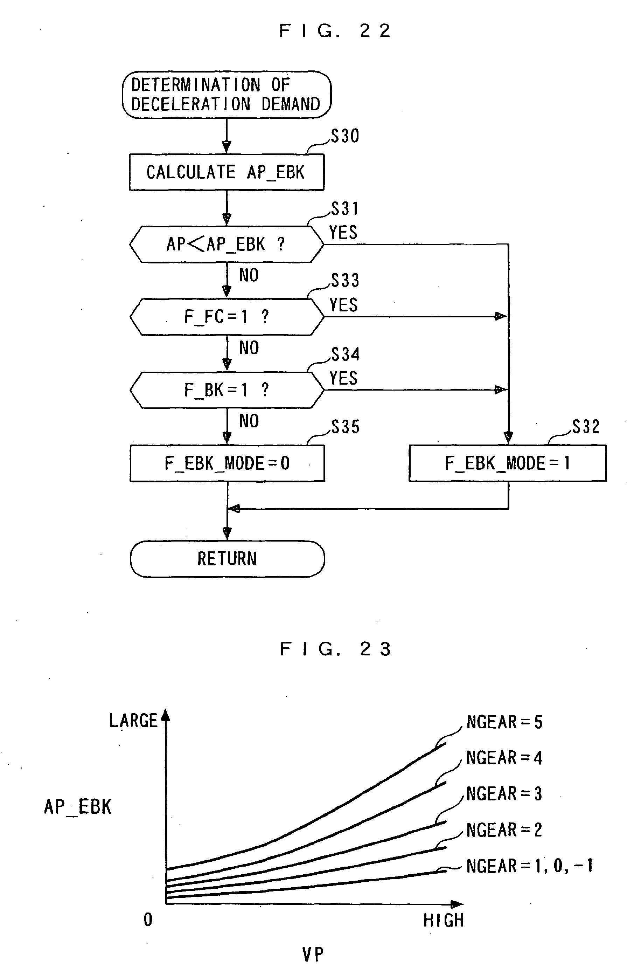

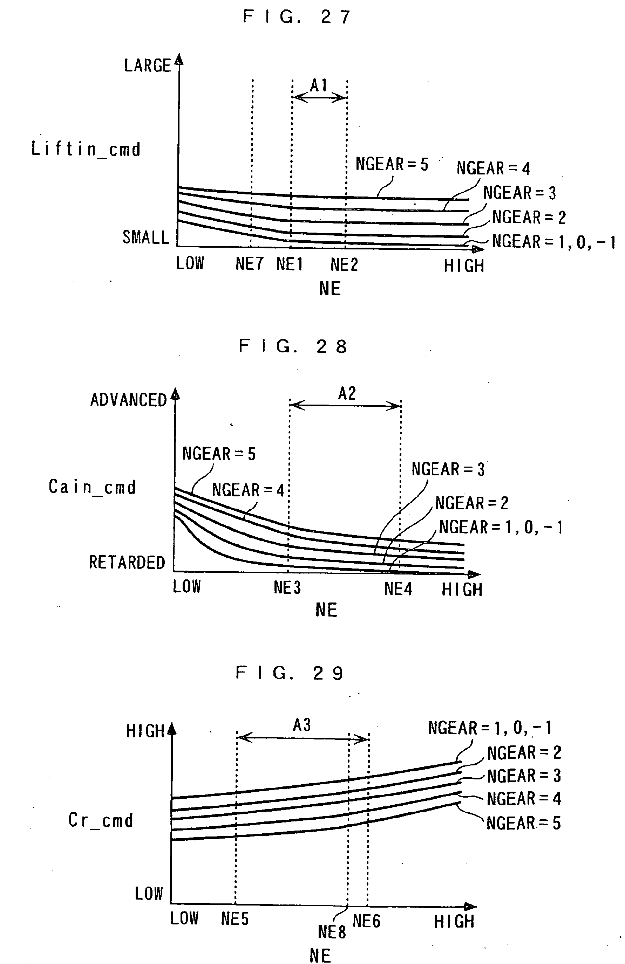

To attain the above objects, the invention as claimed in claim 1 provides a control system 1 for a vehicle V in accordance with claim 1. The vehicle is provided with a transmission 90 for changing speed of power from an internal combustion engine 3 using one of a plurality of predetermined transmission ratios in accordance with an intention of a driver, the control system controlling at least one of a valve lift Liftin which is a lift of at least one of an intake valve 4 and an exhaust valve 7 of the engine 3, a cam phase Cain which is a phase of at least one of an intake cam 6 and an exhaust cam 9 for driving the intake valve 4 and the exhaust valve 7, respectively, with respect to a crankshaft 3d, and a compression ratio Cr of the engine 3, comprising setting means (ECU 2 in an embodiment (the same applies to the following), FIGS. 27, 28, and 29) for setting in advance the at least one of the valve lift Liftin, the cam phase Cain, and the compression ratio Cr to values different from each other in association with the respective transmission ratios, transmission ratio-detecting means (ECU 2, step 20 in FIG. 20, FIG. 21) for detecting the transmission ratio of the transmission 90, deceleration demand-determining means (ECU 2, FIG. 22) for determining whether or not a driver's demand for deceleration has occurred, and determination means (ECU 2, steps 26 to 28 in FIG. 20) for determining the at least one of the valve lift Liftin, the cam phase Cain, and the compression ratio Cr, according to the detected transmission ratio (gear position estimated value NGEAR) of the transmission 90, based on settings by the setting means, when the deceleration demand-determining means has determined that the demand for deceleration has occurred.

According to this control system for a vehicle, the setting means sets in advance at least one of the valve lift, the cam phase, and the compression ratio to values different from each other in association with the respective transmission ratios. Further, the deceleration demand-determining means determines whether or not a driver's demand for deceleration has occurred, and when it is determined that the demand for deceleration has occurred, the determination means determines at least one of the valve lift, the cam phase, and the compression ratio, according to the detected transmission ratio, based on the settings by the setting means. The valve lift, the cam phase, and the compression ratio are parameters having influence on the engine braking force. Therefore, by setting at least one of these parameters in advance to values different from each other in association with the respective transmission ratios, as described above, and selecting and determining a value corresponding to the detected transmission ratio from the set parameter, when the driver has demanded deceleration, it is possible to obtain engine braking forces different between the transmission ratios. With this configuration, when the driver demands deceleration, if he/she feels that the current engine braking force is insufficient, it is possible to urge the driver to change the current transmission ratio to another enabling a larger engine braking force to be obtained. This makes it possible to obtain an appropriate engine braking force, and hence to reduce the frequency of use of the foot brake to prolong the service life thereof.

The invention as claimed in claim 2 is the control system 1 as claimed in claim 1, characterized in that the setting means sets the at least one of the valve lift Liftin, the cam phase Cain, and the compression ratio Cr, such that an engine braking force of the engine 3 becomes larger as the transmission ratio of the transmission 90 is larger (FIGS. 27, 28, and 29).

In general, as the transmission ratio is larger, i.e. one for a lower vehicle speed, a larger rotational speed of the engine is required with respect to the speed of the vehicle, and this makes the engine braking force larger. In contrast, according to the present invention, as the transmission ratio is larger, at least one of the valve lift, the cam phase, and the compression ratio is set such that the engine braking force becomes larger. As a result, by setting the relationship between the transmission ratio and the engine braking force such that it has the same tendency as the normal relationship therebetween, it is possible to cause the driver to be easily sure of the current transmission ratio, when deceleration is demanded. Further, it is possible to obtain a larger engine braking force by changing the transmission ratio toward the low-speed side, and a smaller engine braking force by changing the transmission ratio toward the high-speed side, and hence it is possible to smoothly obtain an appropriate engine braking force by the same speed change operation as normally carried out.

To attain the above second object, the invention provides a control system 1 for a vehicle V, for controlling at least one of a valve lift Liftin which is a lift of at least one of an intake valve 4 and an exhaust valve 7 of an internal combustion engine 3, a cam phase Cain which is a phase of at least one of an intake cam 6 and an exhaust cam 9 for driving the intake valve 4 and the exhaust valve 7, respectively, with respect to a crankshaft 3d, and a compression ratio Cr of the engine 3, comprising rotational speed-detecting means (crank angle sensor 20, ECU 2) for detecting a rotational speed of the engine 3, deceleration demand-determining means for determining whether or not a driver's demand for deceleration has occurred, and setting means (ECU 2, steps 26 to 28 in FIG. 20, FIGS. 27, 28, and 29) for setting the at least one of the valve lift Liftin, the cam phase Cain, and the compression ratio Cr, such that an engine braking force of the engine 3 becomes smaller as the detected rotational speed of the engine 3 is lower, when the deceleration demand-determining means has determined that the demand for deceleration has occurred.

According to this control system for a vehicle, the deceleration demand-determining means determines whether or not a driver's demand for deceleration has occurred, and when it is determined that the demand for deceleration has occurred, the setting means sets at least one of the valve lift, the cam phase, and the compression ratio, such that an engine braking force of the engine becomes smaller as the detected rotational speed of the engine is lower. As a result, when the driver has demanded deceleration, if the rotational speed of the engine is low, the engine braking force is reduced, whereby it is possible to make the above-described jerky feeling less liable to be caused by a sudden change in the engine braking force. This makes it possible to ensure excellent drivability.

To attain the above second object, the invention provides a control system 1 for a vehicle V, for controlling at least one of a valve lift Liftin which is a lift of at least one of an intake valve 4 and an exhaust valve 7 of an internal combustion engine 3, a cam phase Cain which is a phase of at least one of an intake cam 6 and an exhaust cam 9 for driving the intake valve 4 and the exhaust valve 7, respectively, with respect to a crankshaft 3d, and a compression ratio Cr of the engine 3, comprising rotational speed-detecting means for detecting a rotational speed of the engine 3, deceleration demand-determining means for determining whether or not a driver's demand for deceleration has occurred, and setting means (ECU 2, steps 26 to 28 in FIG. 20, FIGS. 27, 28 and 29) for setting the at least one of the valve lift Liftin, the cam phase Cain, and the compression ratio Cr, such that a rate of change thereof with respect to the rotational speed of the engine 3 becomes smaller than when the demand for deceleration has not occurred, when the deceleration demand-determining means has determined that the demand for deceleration has occurred, and at the same time the detected rotational speed of the engine 3 is within a predetermined rotational speed region (first engine speed region A1, second engine speed region A2, third engine speed region A3).

According to this control system for a vehicle, the deceleration demand-determining means determines whether or not a driver's demand for deceleration has occurred. Further, when it is determined that the driver's demand for deceleration has occurred, and at the same time the detected rotational speed of the engine is within the predetermined rotational speed region, at least one of the valve lift, the cam phase, and the compression ratio is set such that a rate of change thereof with respect to the rotational speed of the engine becomes smaller than when the demand for deceleration has not occurred.

In general, during deceleration, as the valve lift is larger, the air flow resistance of intake air and exhaust air becomes smaller, which makes the pumping loss smaller to make the engine braking force smaller. Further, as the valve overlap between the intake valve and the exhaust valve is larger, the degree of hermetic closure of the combustion chamber attained by the intake valve and the exhaust valve in the vicinity of the start of the intake stroke after the end of the exhaust stroke is smaller, which makes the pumping loss smaller to make the engine braking force smaller. Furthermore, as the compression ratio is larger, resistant torque of the engine against the vehicle, which is generated when the air drawn in is compressed, increases, whereby the engine braking force is made larger.

Moreover, when load on the engine is relatively low, if the rotational speed region of the engine is within a low-to-medium region, there is a tendency that as the rotational speed of the engine is lower, the valve lift is controlled to be higher, the cam phase to be larger in the valve overlap, and the compression ratio to be higher, for improvement of fuel economy. Therefore, if the above control is directly applied during deceleration, a sudden drop in the rotational speed causes a sudden change in the valve lift toward the higher lift side and a sudden change in the cam phase in the direction of increasing the valve overlap, whereby the engine braking force is suddenly reduced, while a sudden change in the compression ratio toward the higher compression ratio side causes a sudden increase in the engine braking force. This results in unnatural changes in the engine braking force to cause the jerky feeling.

In contrast, according to the present invention, when the driver has demanded deceleration, and at the same time the rotational speed of the engine is within the predetermined rotational speed region, e.g. the low-to-medium rotational speed region, at least one of the valve lift, the cam phase, and the compression ratio is set such that the rate of change thereof with respect to the rotational speed of the engine becomes smaller than when the demand for deceleration has not occurred. With such a configuration of the valve lift or the cam phase, it is possible to prevent a sudden increase in the engine braking force, and with such a configuration of the compression ratio, it is possible to prevent a sudden increase in the engine braking force, whereby it is possible to smoothly change the engine braking force, and hence to ensure excellent drivability.

To attain the above first object, the invention provides a control system 1 for a vehicle V, for controlling a valve lift Liftin which is a lift of at least one of an intake valve 4 and an exhaust valve 7 of an internal combustion engine 3, and controlling a compression ratio Cr of the engine by changing a stroke of the engine 3, comprising deceleration demand-determining means for determining whether or not a driver's demand for deceleration has occurred, and setting means (ECU 2, steps 26 and 28 in FIG. 20, FIGS. 27 and 29) for setting the valve lift Liftin to a reduced value, and the compression ratio to an increased value, when the deceleration demand-determining means has determined that the demand for deceleration has occurred.

According to this control system, the deceleration demand-determining means determines whether or not a driver's demand for deceleration has occurred, and when it is determined that the driver's demand for deceleration has occurred, the setting means sets the valve lift to a reduced value, and the compression ratio to an increased value. By thus setting the valve lift to be a reduced value, the pumping loss is increased, which increases the engine braking force. Further, by controlling the compression ratio to be increased, the resistant torque of the engine against the vehicle (hereinafter referred to as "the engine friction"), which is generated when the air drawn in is compressed, increases, which also increases the engine braking force. As described above, a larger engine braking force can be obtained as a combination of the engine braking force obtained by the setting of the valve lift and the engine braking force obtained by the setting of the compression ratio. This makes it possible to prolong the service life of the foot brake

The invention further comprises rotational speed-detecting means for detecting a rotational speed of the engine 3, and the setting means sets the valve lift Liftin to a larger value, and/or the compression ratio Cr to a smaller value, as the detected rotational speed of the engine is lower (step 26 in FIG. 20, and FIGS. 28, 27, and 29).

With the configuration of this control system, as the detected rotational speed of the engine is lower, the valve lift is set to a larger value, and/or the compression ratio Cr to a smaller value. This causes, when the rotational speed of the engine is low, the pumping loss and/or the engine friction to be reduced, and therefore the engine braking force can be reduced, whereby it is possible to make the above-described jerky feeling less liable to be caused by a sudden change in the engine braking force. This makes it possible to ensure excellent drivability.

### [Brief Description of the Drawings]

[FIG. 1]

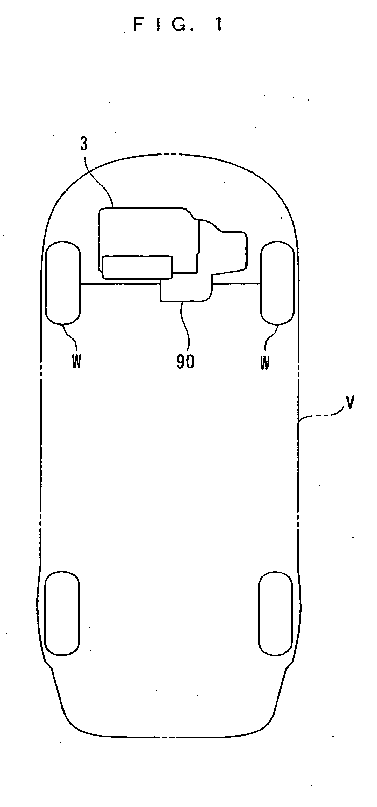

   FIG. 1 is a schematic diagram of a vehicle to which is applied a control system according to the present invention.
[FIG. 2]

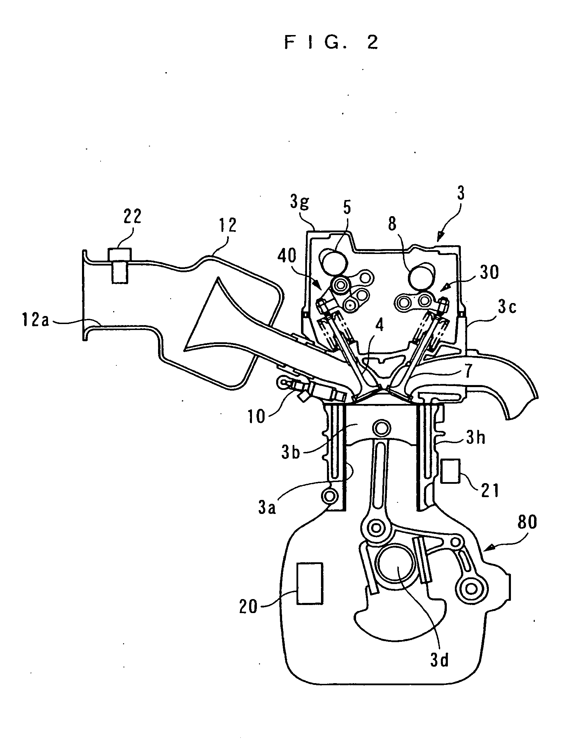

   FIG. 2 is a schematic diagram of an internal combustion engine shown in FIG. 1.
[FIG. 3]

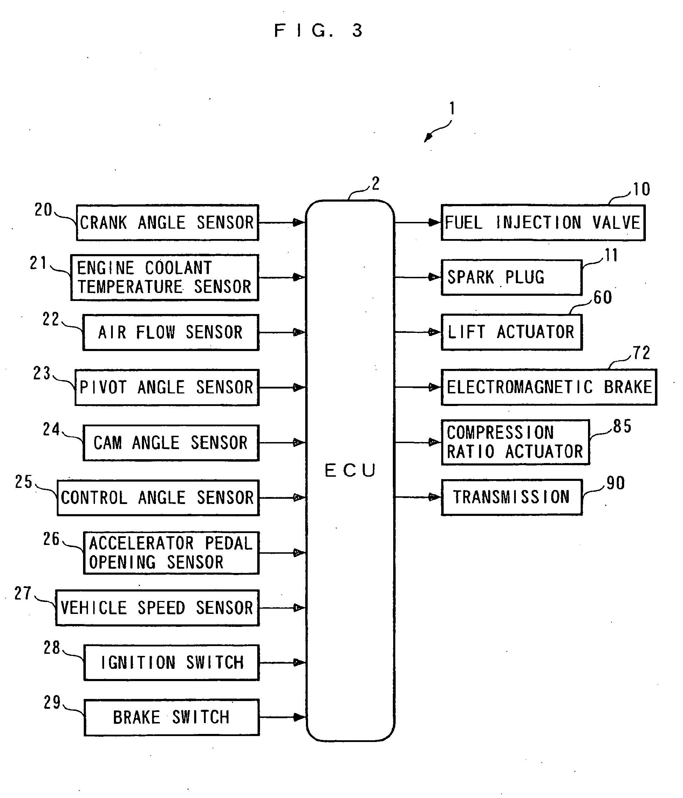

   FIG. 3 is a schematic block diagram of the control system.
[FIG. 4]

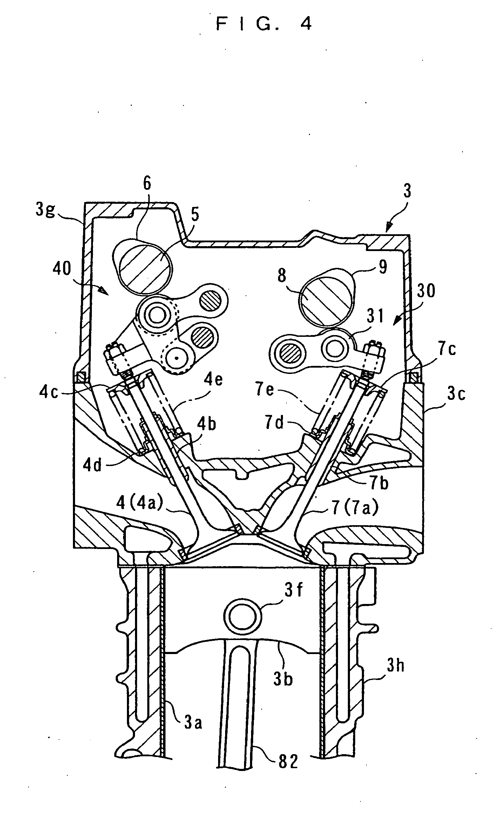

   FIG. 4 is a schematic cross-sectional view of a variable intake valve-actuating mechanism and a variable exhaust valve-actuating mechanism of the engine.
[FIG. 5]

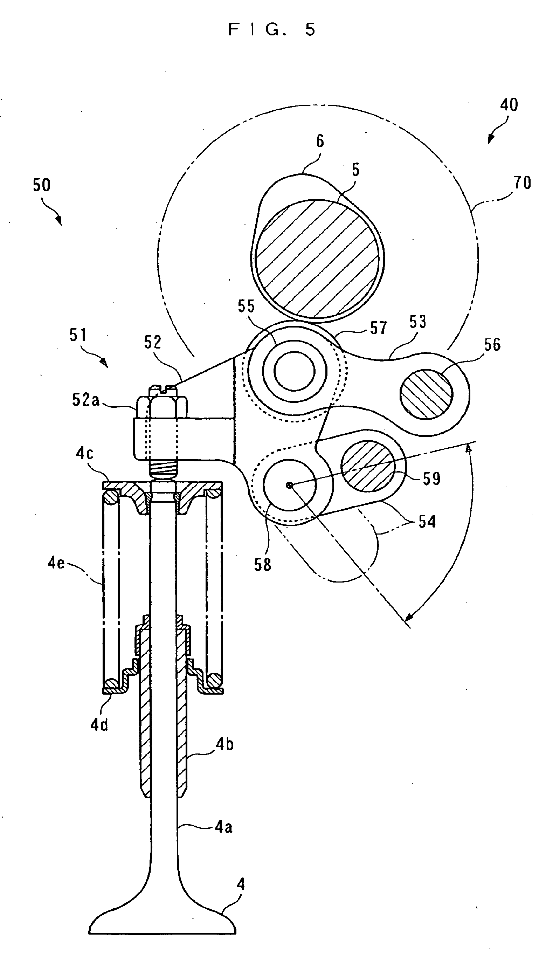

   FIG. 5 is a schematic cross-sectional view of a variable valve lift mechanism of the variable intake valve-actuating mechanism.
[FIG. 6]

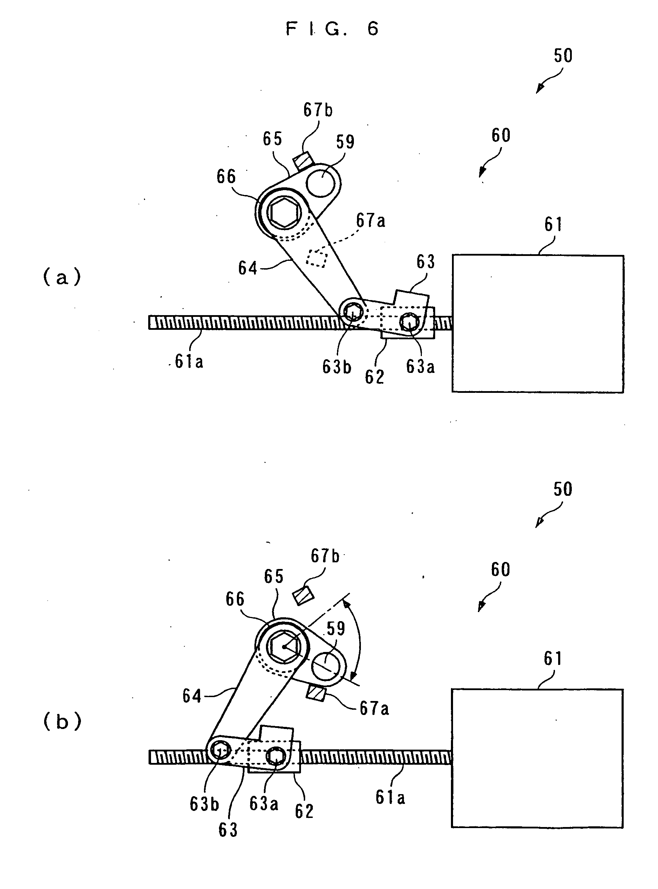

   FIG. 6(a) is a view of a lift actuator in a state in which a short arm thereof is in abutment with a maximum lift stopper, and FIG. 6(b) is a view of the lift actuator in a state in which the short arm thereof is in abutment with a minimum lift stopper.
[FIG. 7]

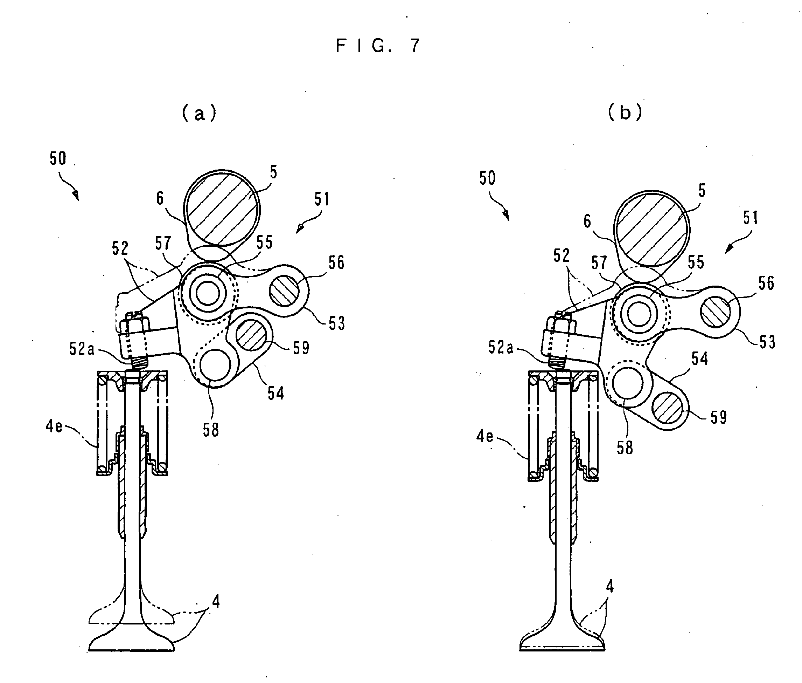

   FIG. 7(a) is a view of an intake valve placed in an open state when a lower link of the variable valve lift mechanism is in a maximum lift position, and FIG. 7(b) is a view of the intake valve placed in an open state when the lower link of the variable valve lift mechanism is in a minimum lift position.
[FIG. 8]

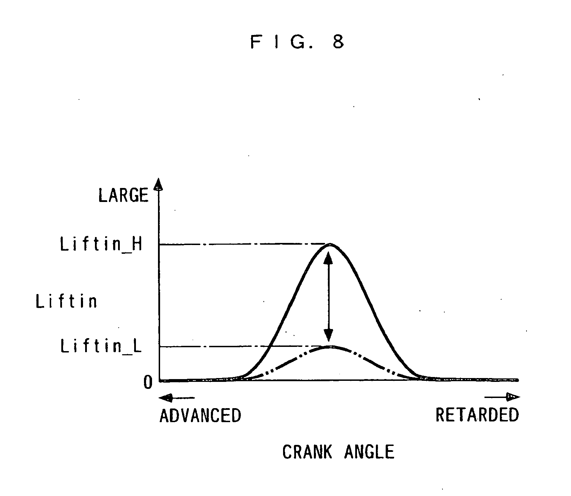

   FIG. 8 is a diagram showing a valve lift curve (solid line) of the intake valve obtained when the lower link of the variable valve lift mechanism is in the maximum lift position, and a valve lift curve (two-dot chain line) of the intake valve obtained when the lower link of the variable valve lift mechanism is in the minimum lift position.
[FIG. 9]

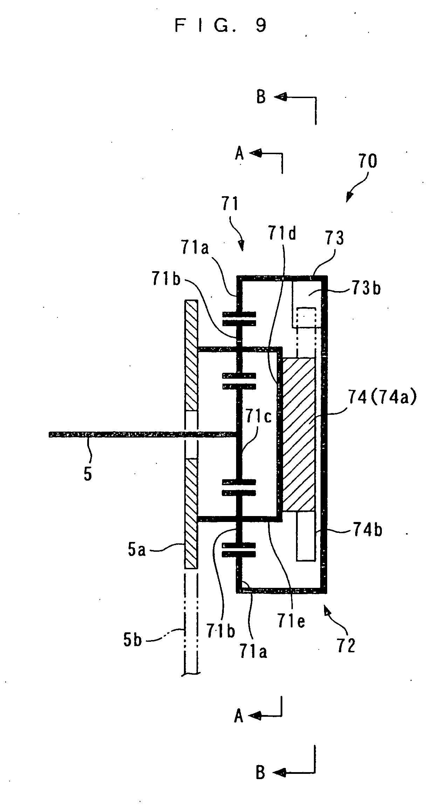

   FIG. 9 is a schematic view of a variable cam phase mechanism.
[FIG. 10]

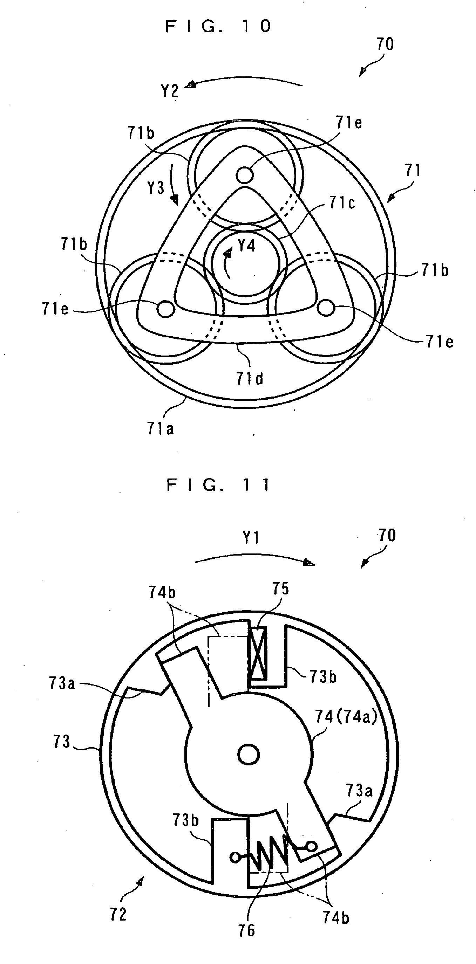

   FIG. 10 is a schematic view of a planetary gear unit taken on line A-A of FIG. 9.
[FIG. 11]
   FIG. 11 is a schematic view of an electromagnetic brake taken on line B-B of FIG. 9.
[FIG. 12]

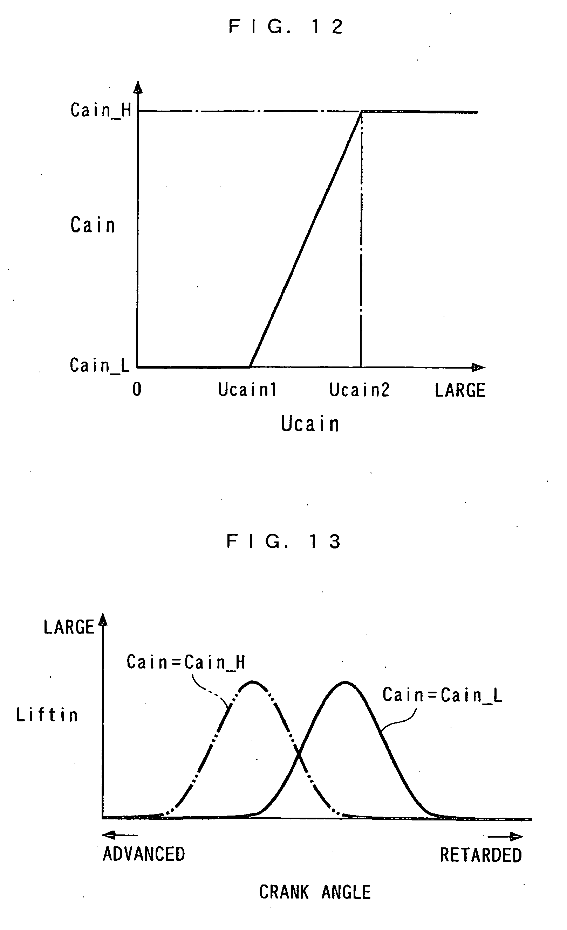

   FIG. 12 is a characteristic curve indicative of an operating characteristic of the variable cam phase mechanism.
[FIG. 13]
   FIG. 13 is a diagram showing a valve lift curve (solid line) obtained when a cam phase is set to a most retarded value by the variable cam phase mechanism, and a valve lift curve (two-dot chain line) obtained when the cam phase is set to a most advanced value by the variable cam phase mechanism.
[FIG. 14]

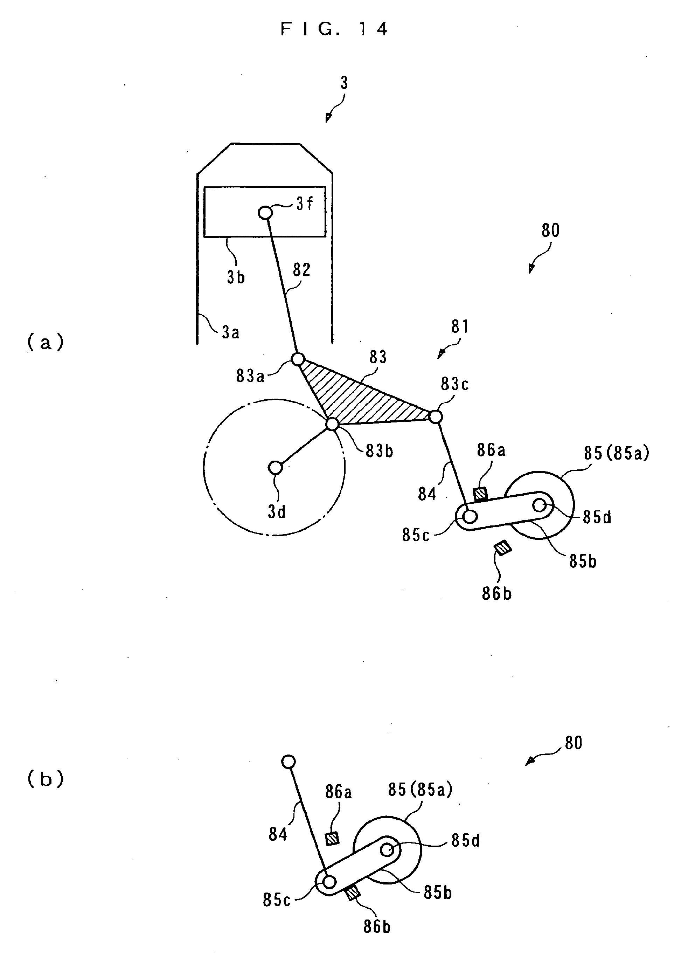

   FIG. 14(a) is a schematic view of the whole arrangement of a variable compression ratio mechanism in a state where a compression ratio is set to a minimum value, and FIG. 14(b) is a schematic view of the arrangement of a compression ratio actuator and their vicinity of the variable compression ratio mechanism in a state where the compression ratio is set to a maximum value.
[FIG. 15]

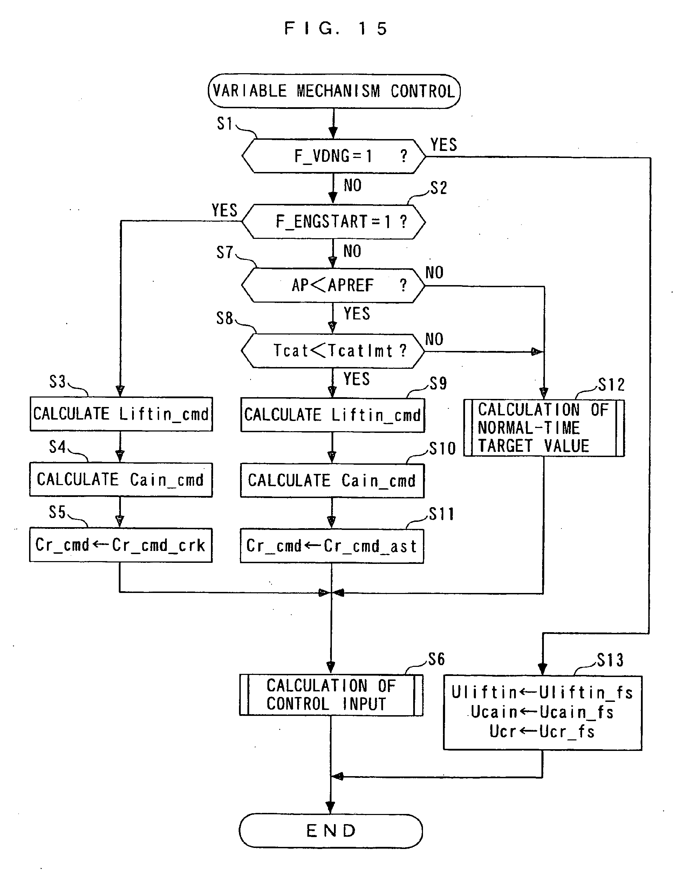

   FIG. 15 is a flowchart of a variable mechanism control process.
[FIG. 16]

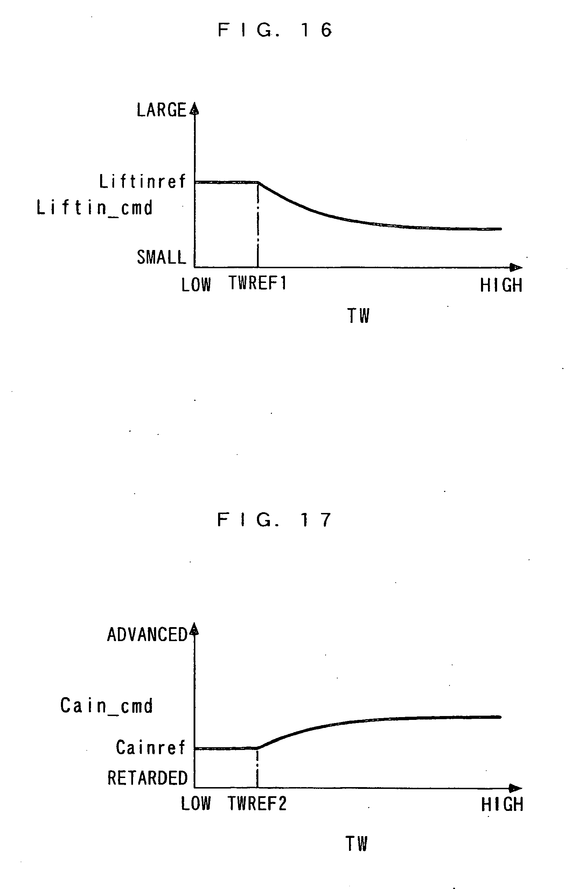

   FIG. 16 is a diagram showing an example of a table for use in the calculation of a target valve lift Liftin_cmd for engine start time.
[FIG. 17]
   FIG. 17 is a diagram showing an example of a table for use in the calculation of a target cam phase Cain_cmd for engine start time.
[FIG. 18]

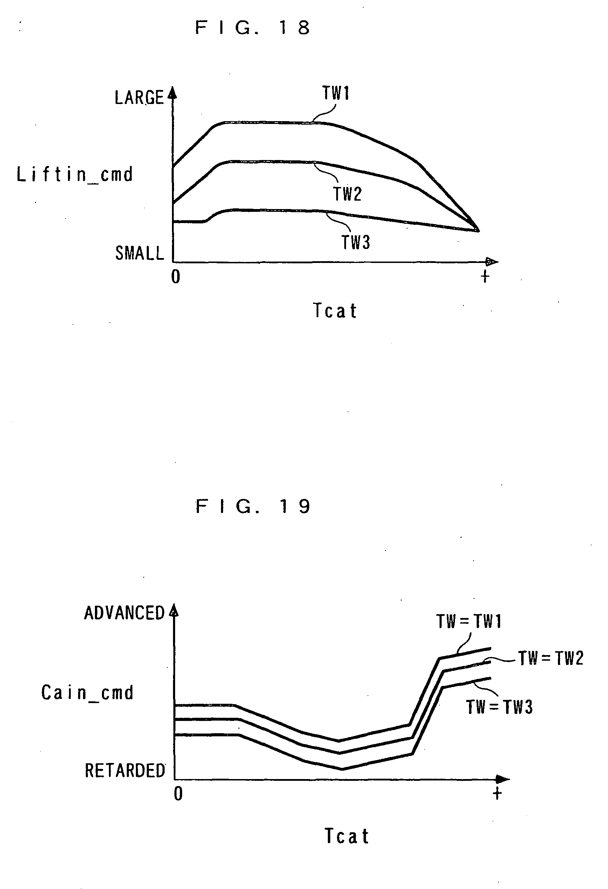

   FIG. 18 is a diagram showing an example of a map for use in the calculation of a target valve lift Liftin_cmd for catalyst warmup control time.
[FIG. 19]
   FIG. 19 is a diagram showing an example of a map for use in the calculation of a target cam phase Cain_cmd for catalyst warmup control time.
[FIG. 20]
   FIG. 20 is a flowchart of a normal-time target value calculating process.
[FIG. 21]
   FIG. 21 is a diagram showing an example of a map for use in setting a gear position estimated value NGEAR.
[FIG. 22]
   FIG. 22 is a flowchart of a deceleration demand-determining process.
[FIG. 23]
   FIG. 23 is a diagram showing an example of a map for use in the calculation of a deceleration demand reference value AP_EBK.
[FIG. 24]

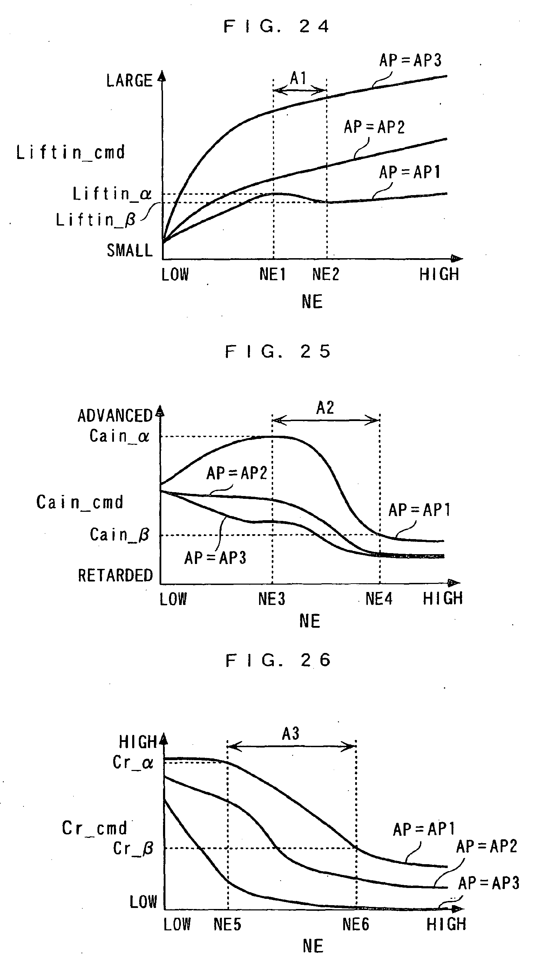

   FIG. 24 is a diagram showing an example of a map for use in the calculation of a normal-time target valve lift Liftin_cmd.
[FIG. 25]
   FIG. 25 is a diagram showing an example of a map for use in the calculation of a normal-time target cam phase Cain_cmd.
[FIG. 26]
   FIG. 26 is a diagram showing an example of a map for use in the calculation of a normal-time target compression ratio Cr_cmd.
[FIG. 27]
   FIG. 27 is a diagram showing an example of a map for use in the calculation of a deceleration-demanded-time target valve lift Liftin_cmd.
[FIG. 28]
   FIG. 28 is a diagram showing an example of a map for use in the calculation of a deceleration-demanded-time target cam phase Cain_cmd.
[FIG. 29]
   FIG. 29 is a diagram showing an example of a map for use in the calculation of a deceleration-demanded-time target compression ratio Cr_cmd.

### [Best Mode for Carrying Out the Invention]

Hereafter, a preferred embodiment of the invention will be described with reference to the drawings. FIG. 1 is a schematic diagram of a vehicle V to which is applied a control system 1 for a vehicle, according to the present invention. The vehicle V has an internal combustion engine (hereinafter simply referred to as "the engine") 3 and a transmission 90 installed thereon. The transmission 90 is of an automatic type for changing the speed of power from the engine 3 using one of a plurality of predetermined transmission ratios to transmit the power to drive wheels W and W. Further, the transmission 90 is configured such that it selectively sets six gear positions formed by first to fifth speed gear positions and a reverse gear position, and the operation of the transmission 90 is controlled by an ECU 2, described hereinafter, of the control system 1 according to the shift position of a shift lever (not shown) operated by a driver (see FIG. 3).

As shown in FIGS. 2 and 4, the engine 3 is an inline four-cylinder DOHC gasoline engine, and has four cylinders 3a (only one of which is shown), and respective pistons 3b (only one of which is shown) associated therewith. The engine 3 includes an intake valve 4 and an exhaust valve 7 provided for each cylinder 3a, for opening and closing an intake port and an exhaust port thereof, respectively, a variable intake valve-actuating mechanism 40 for actuating the intake valves 4, which includes an intake camshaft 5 and intake cams 6, an exhaust valve-actuating mechanism 30 for actuating the exhaust valves 7, which includes an exhaust camshaft 8 and exhaust cams 9, a variable compression ratio mechanism 80 that varies a compression ratio, fuel injection valves 10, and spark plugs 11 (see FIG. 3).

The intake valve 4 has a stem 4a slidably fitted in a guide 4b. The guide 4b is fixed to a cylinder head 3c. The intake valve 4 is provided with upper and lower spring sheets 4c and 4d, and a valve spring 4e disposed therebetween (see FIG. 5), and the intake valve 4 is urged by the valve spring 4e in the valve-closing direction.

The intake camshaft 5 and the exhaust camshaft 8 are rotatably mounted through the cylinder head 3c via respective holders, not shown. Further, an intake sprocket 5a is coaxially mounted on one end of the intake camshaft 5 in a rotatable manner (see FIG. 9). The intake sprocket 5a is connected to a crankshaft 3d by a timing belt 5b, and to the intake camshaft 5 via a variable cam phase mechanism 70, described hereinafter (see FIG. 9). With this arrangement, the intake camshaft 5 rotates one turn per two turns of the crankshaft 3d. The intake cams 6 are integrally formed with the intake camshaft 5 in association with the respective cylinders 3a.

The variable intake valve-actuating mechanism 40 is provided for opening and closing the intake valve 4 of each cylinder 3a in accordance with rotation of the intake cam 6, and steplessly changing the lift and valve timing of the intake valve 4, which will be described in detail hereinafter. It should be noted that in the present embodiment, the lift of the intake valve 4 (hereinafter referred to as "the valve lift") Liftin represents the maximum stroke of the intake valve 4.

The exhaust valve 7 has a stem.7a slidably fitted in a guide 7b. The guide 7b is fixed to the cylinder head 3c. Further, the exhaust valve 7 is provided with upper and lower spring seats 7c and 7d and a valve spring 7e disposed therebetween. The exhaust valve 7 is urged by the valve spring 7e in the valve-closing direction.

The exhaust camshaft 8 has an exhaust sprocket (not shown) integrally formed therewith, and is connected to the crankshaft 3d by the exhaust sprocket and the timing belt 5b, whereby the exhaust camshaft 8 rotates one turn per two turns of the crankshaft 3d. The exhaust cams 9 are integrally formed with the exhaust camshaft 8 in association with the respective cylinders 3a.

The exhaust valve-actuating mechanism 30 includes rocker arms 31. Each rocker arm 31 is pivotally moved in accordance with rotation of the associated exhaust cam 9 to thereby open and close the exhaust valve 7 against the urging force of the valve spring 7e.

The fuel injection valve 10 is provided for each cylinder 3a, and is mounted through the cylinder head 3c in a tilted state such that fuel is directly injected into a combustion chamber. That is, the engine 3 is configured as a direct injection engine. Further, the valve-opening time period and the valve-opening timing of the fuel injection valve 10 are controlled by the ECU 2.

The spark plugs 11 as well are provided in association with the respective cylinders 3a, and are mounted through the cylinder head 3c. The ignition timing of each spark plug 11 is also controlled by the ECU 2.

The engine 3 is provided with a crank angle sensor 20 (rotational speed-detecting means) and an engine coolant temperature sensor 21. The crank angle sensor 20 is comprised of a magnet rotor and an MRE pickup, and delivers a CRK signal and a TDC signal, which are both pulse signals, to the ECU 2 in accordance with rotation of the crankshaft 3d.

Each pulse of the CRK signal is generated whenever the crankshaft 3d rotates through a predetermined crank angle (e.g. 10°). The ECU 2 calculates rotational speed NE of the engine 3 (hereinafter referred to as "the engine speed NE") based on the CRK signal. The TDC signal indicates that the piston 3b of each cylinder 3a is at a predetermined crank angle position slightly before the TDC position at the start of the intake stroke thereof, and in the case of the four-cylinder engine of the illustrated example, it is delivered whenever the crankshaft 3d rotates through 180°.

The engine coolant temperature sensor 21 is implemented e.g. by a thermistor, and detects an engine coolant temperature TW to deliver a signal indicative of the sensed engine coolant temperature TW to the ECU 2. The engine coolant temperature TW represents the temperature of engine coolant circulating through a cylinder block 3h of the engine 3.

Further, the engine 3 has an intake pipe 12 provided with no throttle valve mechanism. An intake passage 12a through the intake pipe 12 is formed to have a large diameter, whereby the engine 3 is configured such that air flow resistance is smaller than an ordinary engine. Further, the intake pipe 12 is provided with an air flow sensor 22. The air flow sensor 22 is formed by a hot-wire air flow meter, and detects the flow rate Gin of air flowing through the intake pipe 12 to deliver a signal indicative of the sensed air flow rate Gin to the ECU 2.

Next, the aforementioned variable intake valve-actuating mechanism 40 will be described with reference to FIGS. 5 to 8. The variable intake valve-actuating mechanism 40 is comprised of the intake camshaft 5, the intake cams 6, a variable valve lift mechanism 50, the variable cam phase mechanism 70, and so forth.

The variable valve lift mechanism 50 is provided for opening and closing the intake valves 4 in accordance with rotation of the intake camshaft 5, and steplessly changing the valve lift Liftin between a predetermined maximum value Liftin_H and a predetermined minimum value Liftin_L. The variable valve lift mechanism 50 is comprised of rocker arm mechanisms 51 of a four joint link type, provided for the respective cylinders 3a, and a lift actuator 60 that simultaneously actuates these rocker arm mechanisms 51.

Each rocker arm mechanism 51 is comprised of a rocker arm 52, and upper and lower links 53 and 54. The upper link 53 has one end pivotally mounted to a rocker arm shaft 56 fixed to the cylinder head 3c, and the other end pivotally mounted on an upper end of the rocker arm 52 by an upper pin 55.

Further, a roller 57 is pivotally disposed on the upper pin 55 of the rocker arm 52. The roller 57 is in contact with a cam surface of the intake cam 6. As the intake cam 6 rotates, the roller 57 rolls on the intake cam 6 while being guided by the cam surface of the intake cam 6. As a result, the rocker arm 52 is vertically driven, and the upper link 53 is pivotally moved about the rocker arm shaft 56.

Furthermore, an adjusting bolt 52a is mounted to an end of the rocker arm 52 toward the intake valve 4. The rocker arm 52 is in contact with the stem 4a of the intake valve 4, and when the rocker arm 52 is vertically moved in accordance with rotation of the intake cam 6, the adjusting bolt 52a vertically drives the stem 4a to open and close the intake valve 4, against the urging force of the valve spring 4e.

Further, the lower link 54 has one end pivotally mounted on a lower end of the rocker arm 52 by a lower pin 58, and the other end of the lower link 54 has a connection shaft 59 pivotally mounted thereto. The lower link 54 is connected to a short arm 65, described hereinafter, of the lift actuator 60 by the connection shaft 59.

The lift actuator 60 is driven by the ECU 2, and as shown in FIG. 6, is comprised of a motor 61, a nut 62, a link 63, a long arm 64, and the short arm 65. The motor 61 is connected to the ECU 2, and is disposed outside a head cover 3g of the engine 3. The rotating shaft of the motor 61 is a screw shaft 61a formed with a male screw, and the nut 62 is screwed on the screw shaft 61a. The link 63 has one end pivotally mounted to the nut 62 by a pin 63a, and the other end pivotally mounted to one end of the long arm 64 by a pin 63b. Further, the other end of the long arm 64 is fixed to one end of the short arm 65 by a pivot shaft 66. The pivot shaft 66 is circular in cross section, and is pivotally supported by the head cover 3g of the engine 3. The long arm 64 and the short arm 65 are pivotally moved with the pivot shaft 66 in the center of rotation in unison therewith.

Further, the above-described connection shaft 59 is pivotally mounted to an end of the short arm 65 opposite from the pivot shaft 66, whereby the short arm 65 is connected to the lower link 54 by the connection shaft 59. Further, a minimum lift stopper 67a and a maximum lift stopper 67b are arranged in the vicinity of the short arm 65 in a manner spaced from each other, and the range of pivotal motion of the short arm 65 is restricted by the two stoppers 67a and 67b, as described hereinafter.

Next, a description will be given of the operation of the variable valve lift mechanism 50 configured as above. In the variable valve lift mechanism 50, when a lift control input Uliftin, described hereinafter, is input from the ECU 2 to the lift actuator 60, the screw shaft 61a of the motor 61 rotates, and the nut 62 is moved in accordance with the rotation of the screw shaft 61a, whereby the long arm 64 and the short arm 65 are pivotally moved with the pivot shaft 66 in the center of rotation. As the short arm 65 is pivotally moved, the connection shaft 59 is moved, whereby the lower link 54 of the rocker arm mechanism 51 is pivotally moved about the lower pin 58. That is, the lower link 54 is driven by the lift actuator 60.

As shown in FIG. 6(a), when the short arm 65 is pivotally moved counterclockwise, as viewed in the figure, the short arm 65 is brought into abutment with the maximum lift stopper 67b, and is stopped thereat, whereby the lower link 54 as well is stopped at a maximum lift position indicated by a solid line in FIG. 5. On the other hand, as shown in FIG. 6(b), when the short arm 65 is pivotally moved clockwise, as viewed in the figure, the short arm 65 is brought into abutment with the minimum lift stopper 67a, and is stopped thereat. As a result, the lower link 54 as well is stopped at a minimum lift position indicated by.a two-dot chain line in FIG. 5.

As described above, the range of the pivotal motion of the short arm 65 is restricted by the two stoppers 67a and 67b between a maximum lift position shown in FIG. 6(a) and a minimum lift position shown in FIG. 6(b), whereby the range of pivotal motion of the lower link 54 is also restricted between the maximum lift position indicated by the solid line in FIG. 5 and the minimum lift position indicated by the two-dot chain line in FIG. 5.

The rocker arm mechanism 51 is configured such that when the lower link 54 is in the maximum lift position, the distance between the center of the upper pin 55 and the center of the lower pin 58 becomes longer than the distance between the center of the rocker arm shaft 56 and the center of the connection shaft 59, whereby as shown in FIG. 7(a), when the intake cam 6 rotates, the amount of movement of the adjusting bolt 52a becomes larger than the amount of movement of a contact point where the intake cam 6 and the roller 57 are in contact with each other.

On the other hand, the rocker arm mechanism 51 is configured such that when the lower link 54 is in the minimum lift position, the distance between the center of the upper pin 55 and the center of the lower pin 58 becomes shorter than the distance between the center of the rocker arm shaft 56 and the center of the connection shaft 59, whereby as shown in FIG. 7(b), when the intake cam 6 rotates, the amount of movement of the adjusting bolt 52a becomes smaller than the amount of movement of the contact point where the intake cam 6 and the roller 57 are in contact with each other.

From the above, when the lower link 54 is in the maximum lift position, the intake valve 4 is opened with a larger valve lift Liftin than when the lower link 54 is in the minimum lift position. More specifically, during rotation of the intake cam 6, when the lower link 54 is in the maximum lift position, the intake valve 4 is opened according to a valve lift curve indicated by a solid line in FIG. 8, and the valve lift Liftin assumes its maximum value Liftin_H. On the other hand, when the lower link 54 is in the minimum lift position, the intake valve 4 is opened according to a valve lift curve indicated by a two-dot chain line in FIG. 8, and the valve lift Liftin assumes its minimum value Liftin_L.

As described above, in the variable valve lift mechanism 50, the lower link 54 is pivotally moved by the actuator 60 between the maximum lift position and the minimum lift position, whereby it is possible to steplessly change the valve lift Liftin between the maximum value Liftin_H and the minimum value Liftin_L.

It should be noted that the variable valve lift mechanism 50 is provided with a lock mechanism, not shown, and the lock mechanism locks the operation of the variable valve lift mechanism 50 when the lift control input Uliftin is set to a failure-time value Uliftin_fs, as described hereinafter, or when the lift control input Uliftin is not input to the lift actuator 60 e.g. due to a disconnection. That is, the variable valve lift mechanism 50 is inhibited from changing the valve lift Liftin, whereby the valve lift Liftin is held at the minimum value Liftin_L. It should be noted that the minimum value Liftin_L is set such that a predetermined failure-time intake air amount can be secured when a cam phase Cain is held at a most retarded value Cain_L, described hereinafter, and at the same time a compression ratio Cr is held at its minimum value Cr_L. The failure-time intake air amount is set such that it is capable of suitably carrying out idling or starting of the engine 3 during stoppage of the vehicle, and maintaining a low-speed traveling condition during travel of the vehicle.

Further, the engine 3 is provided with a pivot angle sensor 23 (see FIG. 3). The pivot angle sensor 23 detects a pivot angle θ lift of the short arm 65, and delivers a signal indicative of the detected pivot angle θ lift of the short arm 65 to the ECU 2. The pivot angle θ lift of the short arm 65 represents a position of the short arm 65 between the maximum lift position and the minimum lift position. The ECU 2 calculates the valve lift Liftin based on the pivot angle θ lift.

Next, the above-described variable cam phase mechanism 70 will be described with reference to FIGS. 9 to 11. As will be described hereinafter, the variable cam phase mechanism 70 is of an electromagnetic type which steplessly changes the cam phase Cain by an electromagnetic force, and includes a planetary gear unit 71 and an electromagnetic brake 72.

The planetary gear unit 71 is provided for transmitting rotation between the intake camshaft 5 and the sprocket 5a, and is comprised of a ring gear 71a, three planetary pinion gears 71b, a sun gear 71c, and a planetary carrier 71d. The ring gear 71a is connected to an outer casing 73, described hereinafter, of the electromagnetic brake 72, and rotates coaxially in unison with the outer casing 73. The sun gear 71c is coaxially attached to a foremost end of the intake camshaft 5, for rotation in unison therewith.

The planetary carrier 71d has a generally triangular shape, and includes shafts 71e protruding from the respective three corners thereof. Further, the planetary carrier 71d is connected to the sprocket 5a by these shafts 71e, whereby it is configured to rotate coaxially in unison with the sprocket 5a.

Further, each planetary pinion gear 71b is rotatably supported on an associated one of the shafts 71e of the planetary carrier 71d, and is disposed between the sung gear 71c and the ring gear 71a, in constant mesh with these gears.

The electromagnetic brake 72 is driven by the ECU 2, and is comprised of the outer casing 73, a core 74, an electromagnet 75, and a return spring 76. The outer casing 73 is formed to be hollow, and the core 74 is disposed therein in a manner rotatable relative to the outer casing 73. The core 74 includes a root portion 74a circular in cross-section, and two arms 74b and 74b extending radially from the root portion 74a. The core 74 has its root portion 74a mounted on the planetary carrier 71d, for coaxial rotation in unison with the planetary carrier 71d.

Further, on the inner peripheral surface of the outer casing 73, there are provided two pairs of stoppers such that the pairs are diametrically opposed to each other, and each pair is formed by a most retarded position stopper 73a and a most advanced position stopper 73b. The stoppers 73a and 73b of each pair are formed in a manner spaced from each other, and each arm 74b of the core 74 are disposed between the stoppers 73a and 73b. With this arrangement, the core 74 is configured such that it can be pivotally moved relative to the outer casing 73 between the most retarded position (indicated by solid lines in FIG. 11) in which the arms 74b are brought into abutment with the most retarded position stoppers 73a and stopped thereat, and the most advanced position (indicated by two-dot chain lines in FIG. 11) in which the arms 74b are brought into abutment with the most advanced position stoppers 73b and stopped thereat.

Further, the return spring 76 is interposed in a compressed state between one of the most advanced position stoppers 73b and the opposed one of the arms 74b, and the urging force Fspr of the return spring 76 urges the arms 74b toward the most retarded position stoppers 73a.

The electromagnet 75 is mounted to one of the most advanced position stoppers 73b on a side opposite to the return spring 76, such that it is flush with an end of the most advanced position stopper 73b opposed to the arm 74b. When the electromagnet 75 is energized by a phase control input Ucain from the ECU 2, the electromagnetic force Fsol thereof attracts the opposed one of the arms 74b against the urging force Fspr of the return spring 76 to pivotally move the same toward the most advanced position stopper 73b.

A description will be given of the operation of the variable cam phase mechanism 70 configured as above. In the variable cam phase mechanism 70, when the electromagnet 75 of the electromagnetic brake 72 is not energized, the core 74 is held by the urging force Fspr of the return spring 76 at the most retarded position in which the arm 74b abuts the most retarded position stopper 73a, whereby the cam phase Cain is held at the most retarded value Cain_L (see FIG. 12).

In this state, as the sprocket 5a rotates in a direction indicated by an arrow Y1 in FIG. 11 along with rotation of the crankshaft 3d of the engine 3 in operation, the planetary carrier 71d and the ring gear 71a rotate in unison, whereby the planetary pinion gears 71b are inhibited from rotation but the sun gear 71c rotates in unison with the planetary carrier 71d and the ring gear 71a. That is, the sprocket 5a and the intake camshaft 5 rotate in unison in the direction indicated by the arrow Y1.

Further, in a state in which the core 74 is held at the most retarded position, if the electromagnet 75 is energized by the phase control input Ucain from the ECU 2, the arm 74b of the core 74 is attracted by the electromagnetic force Fsol of the electromagnet 75 toward the most advanced position stopper 73b, i.e. toward the most advanced position, against the urging force Fspr of the return spring 76, to be pivotally moved to a position where the electromagnetic force Fsol and the urging force Fspr are balanced with each other. In other words, the outer casing 73 is pivotally moved relative to the core 74 in a direction opposite to the direction indicated by the arrow Y1.

This causes the ring gear 71a to pivotally moved relative to the planetary carrier 71d in a direction indicated by an arrow Y2 in FIG. 10, and along therewith, the planetary pinion gears 71b pivotally moves in a direction indicated by an arrow Y3 in FIG. 10, whereby the sun gear 71c pivotally moves in a direction indicated by an arrow Y4 in FIG. 10. As a result, the intake camshaft 5 pivotally moves relative to the sprocket 5a in the direction of the rotation of the sprocket 5a (i.e. a direction opposite to the direction indicated by the arrow Y2 in FIG. 10), whereby the cam phase Cain is advanced.

In this case, the pivotal motion of the outer casing 73 is transmitted to the intake camshaft 5 via the ring gear 71a, the planetary pinion gears 71b, and the sun gear 71c, and therefore the speed-increasing action of the planetary gear unit 70 causes the intake camshaft 5 to pivotally move relative to the sprocket 5a by an amplified or increased amount of angle of rotation of the outer casing 73. That is, the actual amount of advance of the cam phase Cain of the intake cam 5 is configured to be equal to an amplified value of angle of rotation of the outer casing 73. This is because the electromagnetic force Fsol of the electromagnet 75 has a limit beyond which it is not effective, and hence is to compensate for the limit, to thereby cause the cam phase Cain to vary through a wider range.

As described above, in the variable cam phase mechanism 70, the electromagnetic force Fsol acts in the direction of advancing the cam phase Cain, and the urging force Fspr of the return spring 76 acts in the direction of retarding the cam phase Cain. Further, when the electromagnetic force Fsol is not changed, the cam phase Cain is held at a value in which the electromagnetic force Fsol and the urging force Fspr are balanced. Further, the range of pivotal motion of the core 74 is restricted by the two stoppers 73a and 73b to a range defined by the most retarded position indicated by the solid lines in FIG. 11 and the most advanced position indicated by the two-dot chain lines in FIG. 11, whereby the control range of the cam phase Cain is also limited to a range between the most retarded value Cain_L and the most advanced value Cain_H.

Next, a description will be given of the operating characteristics of the variable cam phase mechanism 70. As shown in FIG. 12, in the variable cam phase mechanism 70, the cam phase Cain is held at the most retarded value Cain_L (e.g. a cam angle of 0°) when the phase control input Ucain to the electromagnet 75 is smaller than a predetermined value Ucain1, and is held at the most advanced value Cain_H (e.g. a cam angle of 55°) when the same is larger than a predetermined value Ucain2. Further, when the phase control input Ucain is within the range of Ucain1 ≦ Ucain ≦ Ucain2, the cam phase Cain is continuously varied between the most retarded value Cain_L and the most advanced value Cain_H, whereby the valve timing of the intake valve 4 is steplessly varied between the most retarded timing indicated by a solid line in FIG. 13 and the most advanced timing indicated by a two-dot chain line in FIG. 13. Although not shown, the variable cam phase mechanism 70 has a so-called hysteresis characteristic that the cam phase Cain assumes slightly different values between when the control input Ucain is increasing, and when the control input Ucain is decreasing.

Further, in the variable cam phase mechanism 70, when the phase control input Ucain is set to a failure-time value Ucain_fs, described hereinafter, and when the phase control input Ucain is not input to the electromagnet 75 e.g: due to a disconnection, the cam phase Cain is held at the most retarded value Cain_L. The most retarded value Cain_L is set such that the aforementioned failure-time intake air amount can be secured, when the valve lift Liftin is held at the minimum value Liftin_L, and at the same time when the compression ratio Cr is held at the minimum value Cr_L, as described above.

As described above, in the variable intake valve-actuating mechanism 40 of the present embodiment, the variable valve lift mechanism 50 steplessly changes the valve lift Liftin between the maximum value Liftin_H and the minimum value Liftin_L, mentioned hereinabove, and the variable cam phase mechanism 70 steplessly changes the cam phase Cain between the most retarded value Cain_L and the most advanced value Cain_H, mentioned hereinabove.

A cam angle sensor 24 (see FIG. 3) is disposed at an end of the intake camshaft 5 opposite from the variable cam phase mechanism 70. The cam angle sensor 24 is implemented e.g. by a magnet rotor and an MRE pickup, for delivering a CAM signal, which is a pulse signal, to the ECU 2 along with rotation of the intake camshaft 5. Each pulse of the CAM signal is generated whenever the intake camshaft 5. rotates through a predetermined cam angle (e.g. 1°). The ECU 2 calculates the cam phase Cain based on the CAM signal and the CRK signal, described above.

Next, the aforementioned variable compression ratio mechanism 80 will be described with reference to FIG. 14. The variable compression ratio mechanism 80 is provided for changing the top dead center position of each piston 3b, that is, the stroke of the piston 3b, to thereby steplessly change the compression ratio Cr between a predetermined maximum value Cr_H and a predetermined minimum value Cr_L, and is comprised of a composite link mechanism 81 connected between the piston 3b and the crankshaft 3d of each cylinder 3a, and a compression ratio actuator 85 connected to the composite link mechanism 81.

The composite link mechanism 81 is comprised of an upper link 82, a lower link 83, and a control link 84. The upper link 82 corresponds to a so-called connecting rod, and has an upper end thereof pivotally connected to the piston 3b via a piston pin 3f, and a lower end thereof pivotally connected to an end of the lower link 83 by a pin 83a.

The lower link 83 has a triangular shape. Two ends of the lower link 83 except for the end connected to the upper link 82 are pivotally connected to the crankshaft 3d via a crank pin 83b, and to an end of the control link 84 via a control pin 83c, respectively. With the above configuration, reciprocating motion of the piston 3b is transmitted to the crankshaft 3d via the composite link mechanism 81 such that it is converted into rotating motion of the crankshaft 3d.

Further, the compression ratio actuator 85 is a combination of a motor connected to the ECU 2 and a reduction mechanism (neither of which is shown), and is driven by the ECU 2, as described hereinbelow. The compression ratio actuator 85 is comprised of a casing 85a, an arm 85b, and a control shaft 85c, and the motor and the reduction mechanism are contained in the casing 85a. The arm 85b has one end thereof fixed to a foremost end of a rotating shaft 85b of the reduction mechanism, whereby the arm 85b is pivotally moved along with rotation of the motor with the rotating shaft 85b in the center of rotation. The other end of the arm 85b has the control shaft 85c pivotally connected thereto. The control shaft 85c extends, similarly to the crankshaft 3d, in the direction of depth, as viewed in FIG. 14, and to the control shaft 85c is connected an end of the control link 84 opposite from the control pin 83c.

Further, in the vicinity of the arm 85b, a minimum compression ratio stopper 86a and a maximum compression ratio stopper 86b are provided in a manner spaced from each other, and these two stoppers 86a and 86b restrict the range of pivotal motion of the arm 85b. More specifically, when the motor is driven in normal and reverse rotational directions by a compression ratio control input Ucr, described hereinafter, from the ECU 2, the arm 85b is pivotally moved within a range between a minimum compression ratio position (shown in FIG. 14(a) in which the arm 85b is brought into abutment with the minimum compression ratio stopper 86a and stopped thereat and a maximum compression ratio position (shown in FIG. 14(b) in which the arm 85b is brought into abutment with the maximum compression ratio stopper 86b and stopped thereat.

With the above configuration, in the variable compression ratio mechanism 80, when the rotating shaft 85d of the compression ratio actuator 85 is pivotally moved counterclockwise as viewed in FIG. 14 from the state of the arm 85b being on the minimum compression ratio stopper 86a, the arm 85b is pivotally moved counterclockwise as viewed in FIG. 14 along with the counterclockwise pivotal motion of the rotating shaft 85d. As the whole control link 84 is pressed downward by the downward movement of the arm 85b, the lower link 83 is pivotally moved clockwise as viewed in FIG. 14 about the crank pin 83b, while the upper link 82 is pivotally moved counterclockwise as viewed in FIG. 14 about the piston pin 3f. As a result, the shape formed by the piston pin 3f, the upper pin 83a, and the crank pin 83b is made closer to the shape of a straight line than when they are located in the minimum compression ratio position, whereby the straight-line distance between the piston pin 3f and the crank pin 83b, obtained when the piston 3b has reached the top dead center position is increased (which means that the stroke of the piston 3b is increased), to decrease the volume of the combustion chamber, whereby the compression ratio Cr is increased.

On the other hand, inversely to the above, when the rotating shaft 85d of the compression ratio actuator 85 is rotated clockwise as viewed in FIG. 14 from the state of the arm 85b being on the maximum compression ratio stopper 86b, the arm 85b is pivotally moved clockwise as viewed in FIG. 14 along with the clockwise pivotal motion of the rotating shaft 85, whereby the whole control link 84 is pushed upward. Quite inversely to the above-described operations, this causes the lower link 83 to be pivotally moved counterclockwise, and the upper link 82 to be pivotally moved clockwise, as viewed in FIG. 14. As a result, the straight-line distance between the piston 3f and the crank pin 83b, obtained when the piston 3b has reached the top dead center position is reduced (which means that the stroke of the piston 3b is shortened), to increase the volume of the combustion chamber, whereby the compression ratio Cr is reduced. As described above, in the variable compression ratio mechanism 80, by pivotal motion of the arm 85b between the minimum compression ratio stopper 86a and the maximum compression ratio stopper 86b, the compression ratio Cr is steplessly changed between the minimum value Cr_L and the maximum value Cr_H.

It should be noted that the variable compression ratio mechanism 80 includes a lock mechanism, not shown, and when the compression ratio control input Ucr is set to a failure-time value Ucr_fs, referred to hereinafter, or when the compression ratio control input Ucr is not input to the compression ratio actuator 85 e.g. due to a disconnection, the operation of the variable compression ratio mechanism 80 is locked by the lock mechanism. More specifically, the variable compression ratio mechanism 80 is inhibited from changing the compression ratio Cr, whereby the compression ratio Cr is held at the minimum value Cr_L. As described hereinabove, the minimum value Cr_L is set such that it is capable of ensuring the failure-time intake air amount, when the valve lift Liftin is held at the minimum value Liftin_L, and the cam phase Cain is held at the most retarded value Cain_L.

Further, within the casing 85a of the compression ratio actuator 85, there is provided a control angle sensor 25 (see FIG. 3). The control angle sensor 25 detects a pivot angle θcr of the rotating shaft 85d, i.e. the arm 85b, and delivers a signal indicative of the sensed control angle θcr to the ECU 2. The ECU 2 calculates the compression ratio Cr based on the detection signal output from the control angle sensor 25.

Furthermore, as shown in FIG. 3, an accelerator pedal opening sensor 26 deliver a detection signal indicative of a stepped-on amount AP of an accelerator pedal, not shown, of the vehicle (hereinafter referred to as "the accelerator pedal opening AP") to the ECU 2, and a vehicle speed sensor 27 delivers a detection signal indicative of a vehicle speed VP to the ECU 2.

Further, the vehicle is provided with an ignition switch (hereinafter referred to as "the IG·SW") 28, and a brake switch (hereinafter referred to as "the BK·SW") 29. The IG·SW 28 delivers a signal indicative of an ON/OFF state thereof to the ECU 2, in response to the operation of an ignition key (not shown). When a brake pedal (not shown) is stepped on by an amount not smaller than a predetermined amount, the BK·SW 29 delivers an ON signal to the ECU 2, and otherwise it delivers an OFF signal to the ECU 2.

The ECU 2 is implemented by a microcomputer comprised of a CPU, a RAM, a ROM, and an I/O interface (none of which are shown). The ECU 2 determines operating conditions of the engine 3, based on the detection signals from the aforementioned sensors and switches 20 to 29, and controls the valve lift Liftin, the cam phase Cain, and the compression ratio Cr via the variable valve lift mechanism 50, the variable cam phase mechanism 70, and the variable compression ratio mechanism 80, respectively. It should be noted that in the present embodiment, the ECU 2 implements setting means, transmission ratio-detecting means, deceleration demand-determining means, determination means, and rotational speed-detecting means. Further, in the following description, the variable valve lift mechanism 50, the variable cam phase mechanism 70, and the variable compression ratio mechanism 80 are collectively referred to as "the three variable mechanisms", as deemed appropriate.

Next, a variable mechanism control process executed by the ECU 2 will be described with reference to FIG. 15. This process calculates the three control inputs Uliftin, Ucain, and Ucr for controlling the three variable mechanisms, and is executed at a predetermined control repetition period (e.g. 5 msec).

First, in a step 1, it is determined whether or not a variable mechanism failure flag F_VDNG is equal to 1. When it is determined, in a failure determination process (not shown), that the three variable mechanisms are all normal, the variable mechanism failure flag F_VDNG is set to 1, and otherwise set to 0. If the answer to the question of the step 1 is negative (NO), i.e. if F_VDNG = 0 holds, which means that all the three variable mechanisms are normal, it is determined whether or not an engine start flag F_ENGSTART is equal to 1 (step 2).

The engine start flag F_ENGSTART is set by determining, in a determination process (not shown), based on the engine speed NE and the detection signal from the IG·SW 28, whether or not engine start control is being executed, i.e. the engine 3 is being cranked. More specifically, when the engine start control is being executed, the engine start flag F_ENGSTART is set to 1, and otherwise set to 0.

If the answer to the question of the step 2 is affirmative (YES), i.e. if the engine start control is being executed, a target valve lift Liftin_cmd is calculated by searching a table shown in FIG. 16, according to the engine coolant temperature TW (step 3). In this table, in the range where the engine coolant temperature TW is higher than a predetermined value TWREF1, the target valve lift Liftin_cmd is set to a larger value as the engine coolant temperature TW is lower, and in the range where TW ≦ TWREF1 holds, the target valve lift Liftin_cmd is set to a predetermined value Liftinref. This is to compensate for an increase in friction of the variable valve lift mechanism 50, which is caused when the engine coolant temperature TW is low.

Then, a target cam phase Cain_cmd is calculated by searching a table shown in FIG. 17, according to the engine coolant temperature TW (step 4). In this table, in the range where the engine coolant temperature TW is higher than a predetermined value TWREF2, the target cam phase Cain_cmd is set to a more retarded value as the engine coolant temperature TW is lower, and in the range where TW ≦ TWREF2 holds, the target cam phase Cain_cmd is set to a predetermined value Cainref. This is to ensure the combustion stability of the engine 3 by controlling the cam phase Cain to a more retarded value when the engine coolant temperature TW is low than when the engine coolant temperature TW is high, to thereby reduce the valve overlap to increase the flow velocity of intake air.

Then, a target compression ratio Cr_cmd is set to a predetermined start-time value Cr_cmd_crk (step 5). The start-time value Cr_cmd_crk is set to a low compression ratio value, which is capable of increasing the engine speed NE during execution of cranking of the engine 3 to suppress generation of unburned HC.

Subsequently, the lift control input Uliftin, the phase control input Ucain, and the compression ratio control input Ucr, which are the three control inputs described above, are calculated (step 6), followed by terminating the present process. These three control inputs Uliftin, Ucain, and Ucr are calculated with respective predetermined feedback control algorithms, e.g. target value filter-type two-degree-of-freedom sliding mode control algorithms, based on the actual valve lift Liftin and the target valve lift Liftin_cmd, the actual cam phase Cain and the target cam phase Cain_cmd, and the actual compression ratio Cr and the target compression ratio Cr_cmd, respectively. Thus, the three control inputs Uliftin, Ucain, and Ucr are calculated such that the valve lift Liftin, the cam phase Cain, and the compression ratio follow up and converge to the target valve lift Liftin_cmd, the target cam phase Cain_cmd, and the target compression ratio Cr_cmd, respectively.

On the other hand, if the answer to the question of the step 2 is negative (NO), i.e. if the engine start control is not being executed, it is determined whether or not the accelerator pedal opening AP is smaller than a predetermined value APREF (step 7). If the answer to this question is affirmative (YES), i.e. if the accelerator pedal is not stepped on, it is determined whether or not the count Tcat of a catalyst warmup timer is smaller than a predetermined value Tcatlmt (step 8). This catalyst warmup timer is for measuring an execution time period of a catalyst warmup control process, and is formed by an up-count timer. It should be noted that the catalyst warmup control process is carried out for activation of a catalyst that is provided in an exhaust pipe of the engine 3, for reducing exhaust emissions.

If the answer to the question of the step 2 is affirmative (YES), i.e. if Tcat < Tcatlmt holds, which means that the catalyst warmup control is being executed, the target valve lift Liftin_cmd is calculated by searching a map shown in FIG. 18, according to the count Tcat of the catalyst warmup timer and the engine coolant temperature TW (step 9). In FIG. 18, TW1 to TW3 represent predetermined values of the engine coolant temperature TW (TW1 < TW2 < TW3).

In this map, the target valve lift Liftin_cmd is set to a larger value as the engine coolant temperature TW is lower. This is because as the engine coolant temperature TW is lower, it takes a longer time period to activate the catalyst, and hence the volume of exhaust gasses is increased to shorten the time period required for activation of the catalyst. Furthermore, in the above map, in the region where the count Tcat of the catalyst warmup timer is small, the target valve lift Liftin_cmd is set to a larger value as the count Tcat is larger, whereas in the region where the count Tcat of the catalyst warmup timer is large, the target valve lift Liftin_cmd is set to a smaller value as the count Tcat is larger. This is because as the catalyst warmup control is executed for a longer time period, the engine 3 is more warmed up to lower the friction, and in this case, unless the intake air amount is reduced, the ignition timing is excessively retarded so as to maintain the engine speed NE at a target value, which makes unstable the combustion state of the engine. To avoid the combustion state from being unstable, the map is configured as described above.

Then, the target cam phase Cain_cmd is calculated by searching a map shown in FIG. 19, according to the count Tcat of the catalyst warmup timer and the engine coolant temperature TW (step 10).

In this map, the target cam phase Cain_cmd is set to a more advanced value as the engine coolant temperature TW is lower. This is because as the engine coolant temperature TW is lower, it takes a longer time period to activate the catalyst, as described above, and hence the intake air amount is increased to thereby shorten the time period required for activation of the catalyst. Furthermore, in the above map, in the region where the count Tcat of the catalyst warmup timer is small, the target cam phase Cain_cmd is set to a more retarded value as the count Tcat is larger, whereas in the region where the count Tcat is large, the target cam phase Cain_cmd is set to a more advanced as the count Tcat is larger. The reason for this is the same as given in the description of the FIG. 18 map.

Then, the target compression ratio Cr_cmd is set to a predetermined warmup control value Cr_cmd_ast (step 11). The warmup control value Cr_cmd_ast is set to a low compression ratio value, so as to reduce heat efficiency and increase the temperature of exhaust gases with a view to shortening the time period required for activating the catalyst. Then, the above-described step 6 is executed, followed by terminating the present process.

On the other hand, if the answer to the question of the step 7 or 8 is negative (NO), i.e. if the accelerator pedal is stepped on, or if Tcat ≧ Tcatlmt holds, a normal-time target value-calculating process, described hereinafter, is carried out (step 12), and the above-described step 6 is executed, followed by terminating the present process.

On the other hand, if the answer to the question of the step 1 is affirmative (YES), i.e. if at least one of the three variable mechanisms is faulty, the lift control input Uliftin is set to the predetermined failure-time value Uliftin_fs, the phase control input Ucain to the predetermined failure-time value Ucain_fs, and the compression ratio control input Ucr to the predetermined failure-time value Ucr_fs (step 13), followed by terminating the present process. As a result, as described above, the valve lift Liftin is held at the minimum value Liftin_L, the cam phase Cain at the most retarded value Cain_L, and the compression ratio Cr at the minimum value Cr_L, whereby the failure-time intake air amount is secured. As a result, it is possible to properly carry out idling or starting of the engine 3 during stoppage of the vehicle, and maintain a low-speed traveling condition during travel of the vehicle.

Next, the normal-time target value-calculating process carried out in the step 12 will be described with reference to FIG. 20. First, in the step 20, a gear position estimated value NGEAR (detected transmission ratio of the transmission) is calculated by searching an NGEAR map shown in FIG. 21, according to the vehicle speed VP and the engine speed NE. The gear position estimated value NGEAR represents an estimated current gear position of the transmission 90.

In the NGEAR map, a plurality of regions are defined which represent six gear positions which are to be estimated from the relationship between the vehicle speed VP and the engine speed NE, and a value of the gear position estimated value NGEAR is assigned to each gear position. More specifically, the gear position estimated value NGEAR is set to values of 1 to 5 for the respective first to fifth speed gear positions, and to a value of -1 for a reverse speed position. Further, a region where the engine speed NE is lower than a predetermined value NEREF (e.g. 450 rpm) and a region on a higher vehicle speed side than a region corresponding to the fifth speed gear position are regarded to be a neutral gear position, and hence in these regions, the gear position estimated value NGEAR is set to a value of 0. The reason for uniformly setting the gear position estimated value NGEAR to a value of 0 in the very low engine speed region where the engine speed NE is lower than the predetermined value NEREF is that in the very low engine speed region, the rotation of the engine 3 is unstable, and hence if the gear position estimated value NGEAR is set according to the engine speed NE, the gear position estimated value NGEAR is frequently changed. Therefore, the gear position estimated value NGEAR is set as such to avoid this inconvenience.

Then, a deceleration demand-determining process is carried out (step 21). This process determines whether or not a driver's demand for deceleration has occurred. Hereinafter, the deceleration demand-determining process will be described with reference to FIG. 22. First, in a step 30, a deceleration demand reference value AP_EBK is calculated by searching an AP_EBK map shown in FIG. 23, according to the vehicle speed VP and the gear position estimated value NGEAR. In this map, the deceleration demand reference value AP_EBK is set with respect to the gear position estimated value NGEAR = 1 to 5 corresponding to the respective first to fifth speed gear positions, and when NGEAR = -1 or 0 holds, which correspond to the reverse or neutral gear position, the deceleration demand reference value AP_EBK is set in the same manner as in the case of NGEAR = 1. Further, the deceleration demand reference value AP_EBK is set to a larger value as the gear position estimated value NGEAR is larger, that is, as the gear position is for a higher speed or as the vehicle speed VP is higher.

Then, it is determined whether or not the accelerator pedal opening AP is smaller than the calculated deceleration demand reference value AP_EBK (step 31). If the answer to this question is affirmative (YES), it is determined that deceleration is demanded by the driver, and to indicate the fact, a deceleration demand flag F_EBK_MODE is set to 1 (step 32), followed by terminating the present process. In general, when deceleration is not demanded, the engine 3 is operated with larger accelerator pedal opening AP as the gear position is a higher speed position or as the vehicle speed VP is higher. Therefore, by setting the deceleration demand reference value AP_EBK according to the gear position estimated value NGEAR and the vehicle speed VP, as described above, it is possible to accurately determine whether or not deceleration is demanded by the driver, according to the accelerator pedal opening AP detected when the demand for deceleration has occurred.

On the other hand, if the answer to the question of the step 31 is negative (NO), it is determined whether or not an F/C flag F_FC is equal to 1 (step 33). The F/C flag F_FC is set to 1 when fuel cut (hereinafter referred to as "F/C") is being performed for deceleration depending on the satisfaction of executing conditions therefor.

If the answer to the question of the step 33 is affirmative (YES), i.e. if F_FC = 1 holds, which means that F/C is being performed, it is determined that the demand for deceleration has occurred, and the step 32 is carried out, followed by terminating the present process. On the other hand, if the answer to the question of the step 33 is negative (NO), it is determined whether or not a brake operation flag F_BK is equal to 1 (step 34). The brake operation flag F_BK is set to 1 when the ON signal is.being received from the aforementioned BK·SW 29.

If the answer to the question of the step 34 is affirmative (YES), it is determined that the demand for deceleration has occurred since the brake pedal is stepped on by not smaller than a predetermined amount, and the step 32 is carried out, followed by terminating the present process. On the other hand, if the answers to the questions of the steps 31, 33, and 34 are all negative (NO), it is determined that deceleration is not demanded. Then, to indicate the fact, the deceleration demand flag F_EBK_MODE is set to 0 (step 35), followed by terminating the present process.

Referring again to FIG. 20, in a step 22 following the step 21, it is determined whether or not the deceleration demand flag F_EBK_MODE set in the step 32 or 35 is equal to 1. If the answer to this question is negative (NO), i.e. if deceleration is not demanded, in the next step 23 et seq., a normal-time target valve lift Liftin_cmd, a normal-time target cam phase Cain_cmd, and a normal-time target compression ratio Cr_cmd are calculated, respectively. First, in the step 23, the target valve lift Liftin_cmd is calculated by searching a map shown in FIG. 24, according to the engine speed NE and the accelerator pedal opening AP. In the figure, AP1 to AP3 represent first to third predetermined values of the accelerator pedal opening AP (AP1 < AP2 <to AP3). It should be noted that when the accelerator pedal opening AP assumes a value other than the first to third predetermined values AP1, AP2, AP3, the target valve lift Liftin_cmd is determined by interpolation.

In this map, the target valve lift Liftin_cmd is set to a larger value as the accelerator pedal opening AP is larger. Further, when AP = the second predetermined value AP2 or the third predetermined value AP3 holds, which means the load on the engine 3 is medium or high, the target valve lift Liftin_cmd is set to a larger value as the engine speed NE is higher. This is because as the engine speed NE is higher or as the accelerator pedal opening AP is larger, larger output is demanded of the engine 3, and hence a larger intake air amount is demanded.

Further, when AP = the first predetermined value AP1 holds, which means the load on the engine 3 is low, the target valve lift Liftin_cmd is set as the engine speed NE lowers, such that the target valve lift Liftin_cmd is reduced in a medium-to-high engine speed region where NE > a second predetermined value NE2 (e.g. 3500 rpm) holds, is increased in a predetermined low-to-medium engine speed region (hereinafter referred to as "the first engine speed region") A1 (predetermined engine speed region) defined by first and second predetermined values NE1 (e.g. 2500 rpm) and NE2, at a relatively large rate of change, and is reduced in a very low-to-low engine speed region where NE < NE1 holds, with a larger slope than in the region where NE > NE2 holds. Further, when the engine speed NE is equal to the first predetermined value NE1, and when the engine speed NE is equal to second predetermined value NE2, the target valve lift Liftin_cmd is set to a predetermined value Liftin_α, and a predetermined value Liftin_β, respectively. The target valve lift Liftin_cmd is set as described above in the first engine speed region A1 with a view to improving fuel economy by reducing pumping loss through reduction of the air flow resistance of intake air, which is attained by controlling the valve lift Liftin to be larger.

Next, the target cam phase Cain_cmd is calculated by searching a map shown in FIG. 25, according to the engine speed NE and the accelerator pedal opening AP (step 24).

In this map, when AP = AP1 holds, which means the load on the engine 3 is low, the target cam phase Cain_cmd is set as the engine speed NE lowers, such that it is held at an approximately constant value in a medium-to-high engine speed region where NE > a fourth engine speed NE4 (e.g. 5000 rpm) holds, and is changed toward the advanced side at a very large rate of change in a predetermined low-to-medium engine speed region (hereinafter referred to as "the second engine speed region") A2 (predetermined engine speed region) defined by a third predetermined value NE3 (e.g. 3000 rpm) and the fourth predetermined value NE4. Further, the target cam phase Cain_cmd is set to a predetermined value Cain_α corresponding to the most advanced value when the engine speed NE is equal to the third predetermined value NE3, and a predetermined value Cain_β when the engine speed NE is equal to the fourth predetermined value NE4. The target cam phase Cain_cmd is set as described above in the second engine speed region A2 with a view to improving fuel economy by reducing the pumping loss through increase in the internal EGR amount, which is attained by controlling the cam phase Cain to be largely advanced. Further, in a very low-to-low engine speed region where NE < NE3 holds, the target cam phase Cain cmd is set to a more retarded value as the engine speed NE is lower so as to ensure stable combustion.

Then, the target compression ratio Cr_cmd is calculated by searching a map shown in FIG. 26, according to the engine speed NE and the accelerator pedal opening AP (step 25), followed by terminating the present process.

In this map, the target compression ratio Cr_cmd is set to a smaller value as the engine speed NE is higher or as the accelerator pedal opening AP is larger. This is because knocking is more liable to occur as the load on the engine 3 is higher, and hence the compression ratio Cr is caused to be lowered so as to prevent occurrence of knocking while avoiding reduction of combustion efficiency which is caused by excessively retarded ignition timing.

Further, when AP = AP1 holds, which means the load on the engine 3 is low, the target compression ratio Cr_cmd is set such that in a predetermined low-to-medium engine speed region (hereinafter referred to as "the third engine speed region") A3 (predetermined engine speed region) defined by fifth and sixth predetermined values NE5 and NE6 (e.g. 1500 rpm and 4500 rpm, respectively), the target compression ratio Cr_cmd is increased at a larger rate of change than in the other regions as the engine speed NE lowers, and when the engine speed NE is equal to the fifth predetermined value NE5 and when the engine speed NE is equal to the sixth predetermined value NE6, the target compression ratio Cr_cmd is set to a predetermined value Cr_α and to a predetermined value Cr_β, respectively. As described above, in the third engine speed region A3, the target compression ratio Cr_cmd is set such that it is increased at a very large rate of change as the engine speed NE lowers. This is because, as described hereinabove, in the second engine speed region A2 as the low-to-medium engine speed region, since the cam phase Cain is largely advanced, there is a fear that combustion is made unstable, and hence the compression ratio Cr is largely increased to thereby avoid such inconvenience.

On the other hand, if the answer to the question of the step 22 is affirmative (YES), i.e. if F_EBK_MODE = 1 holds, which means that the demand for deceleration has occurred, in the next step 26 et seq., a deceleration-demanded-time target valve lift Liftin_cmd, a deceleration-demanded-time target cam phase Cain_cmd, and a deceleration-demanded-time target compression ratio Cr_cmd, for use when deceleration is demanded, are calculated, respectively. First, in the step 26, the target valve lift Liftin_cmd is calculated by searching a map shown in FIG. 27, according to the engine speed NE and the gear position estimated value NGEAR.

In this map, the target valve lift Liftin_cmd is set with respect to the gear position estimated value NGEAR = 1 to 5, and when NGEAR = -1 or 0 holds, the target valve lift Liftin_cmd is set to the same value as set with respect to NGEAR = 1. The same applies to maps, described hereinafter, which define the target cam phase Cain_cmd and the target compression ratio Cr_cmd, respectively. The target valve lift Liftin_cmd is set to a smaller value as the gear position estimated value NGEAR is smaller, i.e. as the gear position of the transmission 90 is a lower speed position. This causes the valve lift Liftin to be lowered as the gear position is a lower speed position, whereby the air flow resistance of intake air is increased to increase the pumping loss, which makes it possible to obtain a larger engine braking force.

Further, the target valve lift Liftin_cmd is set to a larger value as the engine speed NE is lower, with respect to each gear position estimated value NGEAR. This causes the valve lift Liftin to be higher as the engine speed NE is lower, whereby the pumping loss is reduced to reduce the engine braking force. Further, in a low-to-high engine speed region where the engine speed NE is higher than a seventh predetermined value NE7 (< NE1) (e.g. 1800 rpm), the target valve lift Liftin_cmd is set to a smaller value than the normal-time target valve lift Liftin_cmd used during the low-load operation of the engine (AP = AP1) shown in FIG. 24, irrespective of the gear position estimated value NGEAR. With this configuration, when the demand for deceleration has occurred in the low-to-high engine speed region, the valve lift Liftin is caused to be reduced to thereby increase the engine braking force.

Further, as described above, the normal-time target valve lift Liftin_cmd used during the low-load operation of the engine is set such that as the engine speed NE lowers, the normal-time target valve lift Liftin_cmd is increased in the first engine speed region A1, and is reduced in the regions on the opposite sides of the first engine speed region A1. Therefore, assuming that the normal-time target valve lift Liftin_cmd is used without modification when deceleration is demanded, if the engine speed NE suddenly drops, the engine braking force suddenly increases in a higher engine speed region than the first engine speed region A1, suddenly decreases in the first engine speed region A1, and suddenly increases in a lower engine speed region than the first engine speed region A1. Thus, the engine braking force repeats a sudden increase or decrease as the engine speed NE suddenly or rapidly drops, to undergo unnatural changes, which gives a sense of discomfort to the driver.

In contrast, the deceleration-demanded-time target valve lift Liftin_cmd is set such that in the first engine speed region A1, it is smaller than the normal-time target valve lift Liftin_cmd in the rate of change with respect to the engine speed NE, and is progressively increased as the engine speed NE lowers in all the engine speed regions including the first engine speed region A1. This makes it possible to gently reduce the engine braking force even if the engine speed NE suddenly drops. As a result, differently from the case of the normal-time target valve lift Liftin_cmd being used when deceleration is demanded, it is possible to smoothly change the engine braking force without giving any sense of discomfort.

Then, the target cam phase Cain_cmd is calculated by searching a map shown in FIG. 28, according to the engine speed NE and the gear position estimated value NGEAR (step 27). In this map, the target cam phase Cain_cmd is set to a more retarded value as the gear position estimated value NGEAR is smaller. As a result, as the gear position is a lower speed position, the cam phase Cain is controlled to be more retarded, that is, changed in the direction of reducing the valve overlap between the intake valve 4 and the exhaust valve 7, whereby the degree of hermetic closure of the combustion chamber by the intake valve 4 in the vicinity of the start of the intake stroke is increased. This increases energy that is used for expanding air within the cylinder 3a along with the downward movement of the piston 3b to increase the pumping loss, which makes it possible to obtain a larger engine braking force.

Further, the target cam phase Cain_cmd is set to a more advanced value as the engine speed NE is lower with respect to each gear position estimated value NGEAR. This causes the cam phase Cain to be more advanced as the engine speed NE is lower, whereby the pumping loss is reduced to reduce the engine braking force. Further, in all the engine speed regions, the target cam phase Cain_cmd is set to be more retarded than the normal-time target cam phase Cain_cmd used during the low-load operation of the engine shown in FIG. 25, referred to hereinabove, irrespective of the gear position estimated value NGEAR. This causes the cam phase Cain to be retarded when deceleration is demanded, to thereby increase the engine braking force.

Further, as described above, the normal-time target cam phase Cain_cmd used during the low-load operation of the engine is set such that as the engine speed NE lowers, the normal-time target cam phase Cain_cmd is changed to be advanced at a very large rate of change in the second engine speed region A2, and is changed to be retarded in an engine speed region lower than the second engine speed region A2. Therefore, if the normal-time target valve lift Liftin_cmd is used without modification when deceleration is demanded, the engine braking force is suddenly reduced with a sudden decrease in the engine speed NE, and then is increased, i.e. it is changed unnaturally.

In contrast, the deceleration-demanded-time target cam phase Cain_cmd is set such that it is smaller than the normal-time target cam phase Cain cmd in the rate of change with respect to the engine speed NE in the second engine speed region A2, and is progressively changed to be advanced as the engine speed NE lowers in all the engine speed regions including the second engine speed region A2. This makes it possible to gently reduce the engine braking force even if the engine speed NE suddenly lowers. As a result, differently from the case of the normal-time target cam phase Cain_cmd being used when deceleration is demanded, it is possible to smoothly change the engine braking force without giving any sense of discomfort.

Then, the target compression ratio Cr_cmd is calculated by searching a map shown in FIG. 29, according to the engine speed NE and the gear position estimated value NGEAR (step 28), followed by terminating the present process. In this map, the target compression ratio Cr_cmd is set to a larger value as the gear position estimated value NGEAR is smaller. As a result, as the gear position is a lower speed position, the compression ratio Cr is controlled to be higher, whereby engine friction as resistant torque of the engine 3 against the vehicle V, which is generated when the air drawn in is compressed, increases, and hence it is possible to obtain a larger engine braking force.

Further, the target compression ratio Cr_cmd is set to a smaller value as the engine speed NE is lower with respect to each gear position estimated value NGEAR. This causes the compression ratio Cr to be lowered as the engine speed NE is lower, whereby the engine friction is reduced to reduce the engine braking force. Furthermore, in a medium-to-high engine speed region where the engine speed NE is higher than an eighth engine speed NE8 (e.g. 4000 rpm) (NE5 < NE8 < NE6), the target compression ratio Cr_cmd is set to a larger value than the normal-time target compression ratio Cr_cmd used during the low-load operation of the engine 3 shown in FIG. 26, referred to hereinbefore, irrespective of the gear position estimated value NGEAR. With this configuration, when deceleration is demanded, in the medium-to-high engine speed region, the compression ratio Cr is caused to be increased to thereby increase the engine braking force.

Further, as described hereinabove, the normal-time target compression ratio Cr_cmd used during the low-load operation of the engine 3 is set such that as the engine speed NE lowers, the normal-time target compression ratio Cr_cmd is changed to a larger value at a very large rate of change in the third engine speed region A3. Therefore, if the normal-time target compression ratio Cr_cmd is used without modification when deceleration is demanded, the engine braking force is suddenly increased with a sudden drop in the engine speed NE, i.e. it is changed unnaturally.

In contrast, the deceleration-demanded-time target compression ratio Cr_cmd is set such that it is smaller than the normal-time target compression ratio Cr_cmd in the rate of change with respect to the engine speed NE in the third engine speed region A3, and is progressively reduced as the engine speed NE lowers in all the engine speed regions including the third engine speed region A3. This makes it possible to gently reduce the engine braking force even if the engine speed NE suddenly drops. As a result, differently from the case of the normal-time target compression ratio Cr_cmd being used when deceleration is demanded, it is possible to smoothly change the engine braking force without giving any sense of discomfort.

As described heretofore, according to the present embodiment, when it is determined that deceleration is demanded by the driver, as the gear position is a lower speed position, that is, as the transmission-ratio is larger, by setting the valve lift Liftin to be lower, the cam phase Cain to be more retarded, and the compression ratio Cr to be higher, a larger engine braking force can be obtained. This makes it possible to cause the driver to be easily sure of the current gear position, and obtain a proper engine braking force smoothly by the same shift operation as normally carried out, whereby it is possible to reduce the frequency of use of the foot brake to prolong the service life thereof. Further, when deceleration is demanded, the valve lift Liftin is set to be reduced and the compression ratio Cr is set to be increased, so that it is possible to obtain a larger engine braking force, as a combination of the engine braking force obtained by the setting of the valve lift Liftin and the engine braking force obtained by the setting of the compression ratio Cr. This makes it possible to further prolong the service life of the foot brake.

Furthermore, when deceleration is demanded, as the engine speed NE is lower, by setting the valve lift Liftin is to be higher, the cam phase Cain to be more advanced, and the compression ratio Cr to be lower, the engine braking force is reduced. This makes it possible to make jerky feeling less liable to be caused by a sudden change in the engine braking force which can be caused if the engine speed NE is low when deceleration is demanded, and therefore, it is possible to ensure excellent drivability.

Further, during deceleration-demanded time, when the engine speed NE is within the first, second, and third engine speed regions A1, A2, and A3, the valve lift Liftin, the cam phase Cain, and the compression ratio Cr are set such that they are changed with respect to the engine speed NE at respective smaller rates of change than during normal time in which deceleration is not demanded. By thus setting the valve lift Liftin and the cam phase Cain, it is possible to prevent a sudden decrease in the engine braking force, and by thus setting the compression ratio Cr, it is possible to prevent a sudden increase in the engine braking force. This makes it possible to smoothly change the engine braking force, thereby making it possible to ensure excellent drivability.

It should be noted that the present invention is by no means limited to the embodiment described above, but can be practiced in various forms. For example, although in the embodiment, the valve lift Liftin of the intake valves 4 is controlled, the valve lift of the exhaust valves 7 may be controlled instead or in combination therewith. Further, although in the embodiment, the cam phase Cain of each intake cam 6 is controlled, the cam phase of each exhaust cam 9 may be controlled instead or in combination therewith. Furthermore, although in the embodiment, the target valve lift Liftin_cmd, the target cam phase Cain_cmd, and the target compression ratio Cr_cmd are set such that the engine braking force becomes larger as the gear position estimated values NGEAR is smaller, that is, as the transmission ratio is larger, the other setting methods as well are within the scope of the present invention insofar as the methods set each of the target valve lift Liftin_cmd, the target cam phase Cain_cmd, and the target compression ratio Cr_cmd to values different from each other in association with the respective different transmission ratios of the transmission 90.

Further, although in the embodiment, the valve lift Liftin, the cam phase Cain, and the compression ratio Cr are all controlled, at least one of them may be controlled. Further, although the embodiment is an example applied to the transmission 90 of the automatic type, this is not limitative, but the present invention may be applied to transmissions of the manual type or the continuously variable type. Furthermore, although in the embodiment, the transmission ratio of the transmission 90 is determined by estimation using the vehicle speed VP and the engine speed NE, the transmission ratio may be directly detected e.g. using a sensor instead. Further, the maps shown in FIGS. 27 to 29 are examples of the settings of the target valve lift Liftin_cmd, the target cam phase Cain_cmd, and the target compression ratio Cr_cmd, but any other arbitrary settings thereof can be employed insofar as they satisfy a condition that they are smaller in the rate of change than corresponding ones for normal time in the first to third engine speed regions A1, A2, and A3. It is to be further understood that various changes and modifications may be made without departing from the scope as defined in the claims.

### [Industrial Applicability]

The control system according to the present invention is very useful in prolonging the service life of a foot brake by obtaining an appropriate engine braking force when deceleration is demanded by the driver of a vehicle, and ensuring excellent drivability by making jerky feeling less liable to be caused by a sudden change in the engine braking force when the rotational speed of the engine is relatively low during deceleration demanded by the driver.

## Claims

1. A control system for a vehicle (V) that is provided with a transmission (90) for changing speed of power from an internal combustion engine (3) using one of a plurality of predetermined transmission ratios in accordance with an intention of a driver, the control system (1) controlling at least one of a valve lift (Liftin) which is a lift of at least one of an intake valve (4) and an exhaust valve (7) of the engine (3), a cam phase (Cain) which is a phase of at least one of an intake cam (6) and an exhaust cam (9) for driving the intake valve (4) and the exhaust valve(7), respectively, with respect to a crankshaft (3d), and a compression ratio (Cr) of the engine, comprising:
setting means (ECU 2) for setting in advance the at least one of the valve lift(Liftin), the cam phase (Cain), and the compression ratio (Cr) to values different from each other in association with the respective transmission ratios;
wherein said setting means (ECU 2) sets in advance the at least one such that an engine braking force of the engine (3) becomes_smaller as a rotational speed of the engine (3) is lower, such that the at least one continuously varies according to the rotational speed of the engine (3), and such that a rate of change of the at least one with respect to the rotational speed of the engine (3) becomes smaller than when a driver's demand for deceleration has not occurred, when the demand for deceleration has occurred, and at the same time the rotational speed of the engine (3) is within a predetermined rotational speed region (A1, A2, A3);
transmission ratio-detecting means (ECU 2, S20) for detecting the transmission ratio (NGEAR) of the transmission (90);
rotational speed-detecting means (20) for detecting the rotational speed of the engine (3);
deceleration demand-determining means (ECU 2) for determining whether or not a driver's demand for deceleration has occurred; and
determination means (ECU 2, S26 - S28) for determining the at least one of the valve lift (Liftin), the cam phase (Cain), and the compression ratio (Cr), according to the detected transmission ratio (NGEAR) of the transmission (90) and the detected rotational speed of the engine (3), based on settings by said setting means (ECU 2), when said deceleration demanddetermining means has determined that the demand for deceleration has occurred.

2. A control system as claimed in claim 1, wherein said setting means (ECU 2) sets the at least one of the valve lift (Liftin), the cam phase (Cain), and the compression ratio (Cr), such that an engine braking force of the engine (3) becomes larger as the transmission ratio (NGEAR) of the transmission (90) is larger.

## Patentansprüche

1. Steuerungssystem für ein Fahrzeug (V), das mit einem Getriebe (90) versehen ist, um die Ausgangsdrehzahl von einem Verbrennungsmotor (3) mittels eines einer Mehrzahl von vorbestimmten Übertragungsverhältnissen gemäß einem Wunsch eines Fahrers zu ändern, wobei das Steuerungssystem (1) zumindest eine Größe von Ventilhub (Liftin), der ein Hub eines Einlassventils (4) und/oder eines Auslassventils (7) des Motors (3) ist, einer Nockenphase (Cain), die eine Phase eines Einlassnockens (6) und/oder eines Auslassnockens (9) zum Antrieb des Einlassventils (4) bzw. des Auslassventils (7) in Bezug auf eine Kurbelwelle (3d) ist, und eines Verdichtungsverhältnisses (Cr) des Motors zu steuern/zu regeln, umfassend:
ein Setzmittel (ECU 2), um vorab die zumindest eine Größe von Ventilhub (Liftin), Nockenphase (Cain) und Verdichtungsverhältnis (Cr) in Zuordnung zu den jeweiligen Übertragungsverhältnissen auf voneinander unterschiedliche Werte zu setzen;
worin das Setzmittel (ECU 2) vorab die zumindest eine Größe derart setzt, dass eine Motorbremskraft des Motors (3) kleiner wird, wenn die Drehzahl des Motors (3) geringer wird, derart, dass sich die zumindest eine Größe kontinuierlich entsprechend der Drehzahl des Motors (3) verändert, und derart, dass eine Änderungsrate der zumindest einen Größe in Bezug auf die Drehzahl des Motors (3) kleiner wird als dann, wenn eine Verzögerungsanforderung eines Fahrers nicht aufgetreten ist, wenn die Anforderung nach Verzögerung aufgetreten ist, und gleichzeitig die Drehzahl des Motors (3) innerhalb eines vorbestimmten Drehzahlbereichs (A1, A2, A3) liegt;
ein Übertragungsverhältniserfassungsmittel (ECU 2, S0) zum Erfassen des Übertragungsverhältnisses (NGEAR) des Getriebes (90);
ein Drehzahlerfassungsmittel (20) zum Erfassen der Drehzahl des Motors (3);
ein Verzögerungsanforderungsbestimmungsmittel (ECU 2) zum Bestimmen, ob eine Anforderung des Fahrers nach Verzögerung stattgefunden hat oder nicht; und
ein Bestimmungsmittel (ECU 2, S26 - S28) zum Bestimmen der zumindest einen Größe von Ventilhub (Liftin), Nockenphase (Cain) und Verdichtungsverhältnis (Cr) gemäß dem erfassten Übertragungsverhältnis (NGEAR) des Getriebes (90) und der erfassten Drehzahl des Motors (3), basierend auf den Einstellungen durch das Setzmittel (ECU 2), wenn das Verzögerungsanforderungsbestimmungsmittel bestimmt hat, dass die Verzögerungsanforderung stattgefunden hat.

2. Steuerungssystem nach Anspruch 1, worin das Setzmittel (ECU 2) die zumindest eine Größe von Ventilhub (Liftin), Nockenphase (Cain) und Verdichtungsverhältnis (Cr) derart setzt, dass eine Motorbremskraft des Motors (3) größer wird, wenn das Übertragungsverhältnis (NGEAR) des Getriebes (90) größer ist.

## Revendications

1. Système de commande pour un véhicule (V) qui est doté d'une transmission (90) pour changer la vitesse de puissance d'un moteur à combustion interne (3) à l'aide de l'un d'une pluralité de rapports de transmission prédéterminés selon l'intention d'un conducteur, le système de commande (1) commandant au moins l'une parmi une levée de soupape (Liftin) qui est une levée d'au moins l'une parmi une soupape d'admission (4) et une soupape d'échappement (7) du moteur (3), une phase de came (Cain) qui est une phase d'au moins l'une parmi une came d'admission (6) et une came d'échappement (9)pour entraîner la soupape d'admission (4) et la soupape d'échappement (7), respectivement, par rapport à un vilebrequin (3d), et un rapport de compression (Cr) du moteur, comprenant :
des moyens de réglage (ECU 2) pour régler à l'avance le au moins parmi une levée de soupape (Liftin), la phase de came (Cain), et le rapport de compression (Cr) à des valeurs différentes les unes des autres en association avec les rapports de transmission respectifs ;
dans lequel lesdits moyens de réglage (ECU 2) règlent à l'avance le au moins un élément de sorte que la force de freinage de moteur du moteur (3) devient plus petite au fur et à mesure qu'une vitesse de rotation du moteur (3) diminue, de sorte que le au moins un élément varie de manière continue selon la vitesse de rotation du moteur (3), et de sorte qu'une vitesse de changement du au moins un élément par rapport à la vitesse de rotation du moteur (3) devient plus petit que lorsque la demande d'un conducteur pour la décélération n'a pas eu lieu, lorsque la demande pour la décélération a eu lieu produite, et en même temps que la vitesse de rotation du moteur (3) est dans une région de vitesse de rotation prédéterminée (A1, A2, A3) ;
des moyens de détection de rapport de transmission (ECU 2, S20) pour détecter le rapport de transmission (NGEAR) de la transmission(90) ;
des moyens de détection de vitesse de rotation (20) pour détecter la vitesse de rotation du moteur (3) ;
des moyens de détermination de demande de décélération (ECU 2) pour déterminer si une demande de décélération du conducteur a eu lieu ou pas ; et
des moyens de détermination (ECU 2, S26 - S28) pour déterminer au moins l'un parmi la levée de soupape (Liftin), la phase de came (Cain) et le rapport de compression (Cr) selon le rapport de transmission détecté (NGEAR) de la transmission (90) et la vitesse de rotation détectée du moteur (3), en fonction des réglages réalisés par lesdits moyens de réglage (ECU 2), lorsque lesdits moyens de détermination de demande de décélération ont déterminé que la demande de décélération a eu lieu.

2. Système de commande selon la revendication 1, dans lequel lesdits moyens de réglage (ECU 2) règlent le au moins l'un parmi la levée de soupape (Liftin), la phase de came (Cain) et le rapport de compression (Cr), de sorte qu'une force de freinage de moteur du moteur (3) devient plus importante au fur et à mesure que le rapport de transmission (NGEAR) de la transmission (90) augmente.
